# NEUE EUROPÄISCHE PATENTSCHRIFT

(11) **EP 0 990 687 B2**
(45) Veröffentlichungstag und Bekanntmachung des Hinweises auf die Entscheidung über den Einspruch: **24.06.2015**
(45) Hinweis auf die Patenterteilung: 27.05.2009
(21) Anmeldenummer: 99890313.2
(22) Anmeldetag: 30.09.1999
(51) Int. Cl.: C09J 103/12, C09J 103/14, C08B 35/00, C08B 31/00

(54) **Klebstoff bzw. Klebstoffvorprodukt**
Adhesive and adhesive preproduct
Adhésif et produit précurseur d'adhésif

(30) Priorität: 01.10.1998 AT 163698
(43) Veröffentlichungstag der Anmeldung: 05.04.2000
(73) Patentinhaber: Südzucker Aktiengesellschaft Mannheim/Ochsenfurt, 68165 Mannheim (DE)
(72) Erfinder: Wastyn, Marnik Michel Dr., 2320 Schwechat (AT); Kozich, Martin Dipl. Ing. Dr., 1140 Wien (AT); Grüll, Dietmar, Dipl. Ing. Dr., 3442 Langenschönbichl (AT)
(74) Vertreter: Hatzmann, Martin

(56) Entgegenhaltungen:
- EP-A- 0 796 868
- EP-A- 0 799 837
- EP-A- 0 981 968
- EP-A2- 0 990 687
- WO-A-00/05319
- WO-A-95/02646
- WO-A-97/03573
- WO-A-97/04167
- WO-A-98/33968
- WO-A1-92/11376
- FR-A1- 2 748 744
- US-A- 5 932 639
- US-B1- 6 600 093

## Beschreibung

### Gebiet der Erfindung

Die gegenständliche Erfindung betrifft ein pulvriges Klebstoffvorprodukt auf der Basis von Amylopektin-Stärke, gegebenenfalls in Kombination mit einem oder mehreren üblichen Zusatzmitteln, wie Rheologieverbesserem, Antischaummitteln, Stabilisatoren, Konservierungsmitteln und/oder weiteren, gegebenenfalls auf Nicht-Stärke-Basis beruhenden Klebstoffen bzw. Klebstoffvorprodukten.

Die Auswahl und Menge der genannten Zusatzmittel richtet sich in erster Linie nach der geplanten Verwendung des Klebstoffs, wobei darauf geachtet werden muß, daß die gewünschten Verbesserungen nicht unter Einbuße anderer Eigenschaften erreicht werden. So ist z.B. die Zugabe von grenzflächenaktiven Emulgatoren, die in manchen Fällen als naheliegend angesehen werden könnte, für Klebstoffe auf Stärkebasis unerwünscht, da derartige Emulgatoren die Klebeeigenschaften des Compounds negativ beeinflussen.

Unter Klebstoffvorprodukten werden vor allem pulvrige Stoffe verstanden, die durch Anrühren mit Wasser zu den fertigen Klebstoffen verarbeitet werden.

### Hintergrund der Erfindung

Stärke ist ein pflanzliches Naturprodukt. Sie besteht im wesentlichen aus einem Glucosepolymer, das in der Regel eine Zusammensetzung aus zwei Bestandteilen darstellt, nämlich Amylopektin und Amylose. Diese sind ihrerseits wieder keine einheitlichen Substanzen, sondern sind Gemische von Polymeren mit unterschiedlichen Molekulargewichten. Amylose besteht im wesentlichen aus unverzweigten Polysacchariden, in denen die Glucose in alpha-1,4-Bindung vorliegt. Amylopektin ist dagegen ein stark verzweigtes Glucosepolymer, bei dem die Glucoseeinheiten neben den alpha-1,4-Bindungen an den Verzweigungsstellen in 1,6-Bindung enthalten sind.

Natürliche Stärken haben in der Regel einen Amylosegehalt von 15 % bis 30 %; nur Maissorten des Waxy-Typs liefern eine Stärke, die fast ausschließlich aus Amylopektin besteht. Das Anwendungsgebiet dieser Stärke, der sogenannten Wachsmaisstärke, liegt überwiegend im Lebensmittelbereich. Hier wird als besondere Tatsache geschätzt, daß die amylosefreie Stärke bei der Verkleisterung in weit geringerem Maße Fäden zieht und daher ein besseres Mundgefühl ergibt. Es hat sich auch gezeigt, daß Amylopektin-Stärke geringere Retrogradationserscheinungen zeigt, d.h. weniger leicht zur Wiedervereinigung bereits getrennter Ketten neigt, als eine amylosereiche Stärke.

Der Anbau von Wachsmais ist in Ländern mit kaltem oder temperiertem Klima, wie in Österreich, Deutschland, Belgien, den Niederlanden, Großbritannien, Polen u.s.w., wirtschaftlich wenig sinnvoll bzw. unmöglich. Daher konnte sich in diesen Gebieten der Wachsmais aus Kostengründen nicht durchsetzen.

Eine übliche Stärkequelle ist in diesen Ländern dagegen die Kartoffel. Im Verhältnis zu Getreidestärke enthält die Kartoffelstärke eine geringere Menge an Lipiden und Proteinen und eine deutliche Menge Phosphat-Estergruppen.

Es sind Verfahren bekannt, um den Amylosegehalt von Stärke auf chemischem Weg herabzusetzen. Der Aufwand hierfür ist jedoch beträchtlich und kann nur betrieben werden, wenn wirtschaftliche Gesichtspunkte es erlauben.

Durch die in letzter Zeit erfolgreich gelungene gentechnische Veränderung der Kartoffel mit dem Ziel der Gewinnung einer amylosefreien Stärke konnte ein neuer Stärketyp zugänglich gemacht werden, wobei über dessen Eigenschaften und Anwendungsgebiete sowie über die technische Verwendbarkeit dieser Stärke wegen der bisher geringen zur Verfugung stehenden Mengen nur wenig bekannt ist. Wenn daher im bisherigen allgemeinen Stand der Technik von amylopektinreichen Stärken gesprochen wird, so handelt es sich praktisch immer um Wachsmaisstärke, in seltenen Fällen auch um andere Wachsgetreidestärken, die aus Mutanten der üblichen Kulturpflanzen erhalten wurden.

Stärke ist ein weitverbreites Ausgangsmaterial für Klebstoffe. Unter Klebstoffen versteht man nach DIN 16.920 nichtmetallische Stoffe, die Fügeteile durch Flächenhaftung und innere Festigkeit verbinden. Klebstoff ist ein Oberbegriff und schließt andere gebräuchliche Begriffe, die nach physikalischen, chemischen oder verarbeitungstechnischen Gesichtspunkten gewählt wurden, wie Leim, Kleister, Dispersionsklebstoff, Kontakt- oder Haftklebstoff u.a.m. ein.

Das Anwendungsgebiet der stärkehältigen Klebstoffe erstreckt sich von der breiten industriellen Verwendung bis zu den Alltagsklebern, wobei häufig amylopektinreiche Stärken verlangt werden, da diese gegenüber amylosehaltigen Stärken eine bessere Langzeit-Viskositätsstabilität bei gleichzeitig guter Klebkraft zeigen. Andererseits gibt es aber auch zahlreiche Fälle, wo sich die amylosereiche Stärke als vorteilhaft gegenüber der Amylopektin-Stärke erwiesen hat.

Allgemeine Literatur zum Thema Klebstoffe findet sich u.a. in "Starch, Chemistry and Technology", herausgegeben von R. L. Whistler, J. N. Bemiller und E. F. Paschall, 1984, Academic Press, Inc., 2. Auflage, pp. 593-610, in "Starch and its Modifications", von M.W. Rutenberg, Kapitel 22, pp. 22-63, und in "Handbook of Water-Soluble Gums and Resins", von R.L. Davidson, MacGraw Hill Book Co. (1980).

In der Regel wird die Stärke in nativer oder in abgebauter und/oder modifizierter und/oder derivatisierter Form als Klebstoff verwendet. Auf die einzelnen Verfahren zur Gewinnung von Stärkederivaten wird später noch detaillierter eingegangen werden.

Ebenso werden die speziellen Anwendungsgebiete auf dem Klebstoffsektor noch ausführlich besprochen.

Für die meisten Anwendungszwecke ist es üblich, den Klebstoffen Additive zur Verbesserung bestimmter Eigenschaften zuzusetzen. Diese Zusätze können vor, während und nach der Verkleisterung bzw. Auflösung der Stärke zugesetzt werden.

Als Rheologieverbesserer können Harnstoff, Xanthan-Gummi, Alginat, Casein, Carrageen, Guar-Gummi, Celluloseether u.a.m. eingesetzt werden.

In manchen Fällen empfiehlt sich der Zusatz von wasserlöslichen Polymeren, wie etwa von Polyvinylalkohol, Polyvinylpyrrolidon bzw. Polyvinylmethylether. Auch Polymere aus der Gruppe Polyvinylacetat, Polyacrylat und Ethylen-Vinylacetat-Copolymere können, vorzugsweise in Form einer Dispersion, zugesetzt werden.

Alkalizusätze, wie Natrium-, Kalium- und Lithiumhydroxid, Mono- oder Polyethanolamine sind für manche Fälle vorteilhaft.

Konservierungsmittel, wie solche auf Basis von Sorbat, Hydroxybenzoesäureester oder Benzisothiazolidin, erhöhen die Beständigkeit der Klebstoffe.

Weiters können als Zusätze Weichmacher, Füllstoffe, Stabilisatoren, optische Aufheller, Pigmente, Farb- oder Duftstoffe, feuchtigkeitsregulierende Stoffe, Schaumverhinderer u.a.m. eingesetzt werden.

Unter Stabilisatoren im Sinne der vorliegenden Erfindung versteht man Stoffe mit Verdickungseigenschaften, die jedoch keine Grenzflächenaktität besitzen (Römpp's Lexikon der Chemie, Franckh'sche Verlagshandlung Stuttgart, 1973, Seite 1010, linke Spalte unten). Dabei handelt es sich um Naturstoffe bzw. abgewandelte Naturstoffe, wie Schleime, Polysaccharide, Cellulosederivate, sowie auch um synthetische Harze oder Hochpolymere, wie beispielsweise Polyvinylalkohol, aber auch um anorganische Verbindungen, wie Aluminiumoxid, Ruß oder Kaolin.

Emulgatoren mit grenzflächenaktiven Eigenschaften sollen vom Ausdruck "Stabilisator" im Sinne der vorliegenden Erfindung nicht umfaßt werden. Beispiele für grenzflächenaktive Emulgatoren sind Mono- oder Diglyceride von Fettsäuren, Ester von Fettsäuren mit Polyglycerinen, Polysorbat, Natriumstearate und ähnliche

In der WO00/05319 wird eine Klebstoffzusammensetzung offenbart, die Stärkederivate mit einem Amylopektingehalt von mindestens 95%, bezogen auf die Trockensubstanz, beinhaltet Die Stärke des Klebstoffs wird dabei aus gentechnisch veränderten Kartoffeln gewonnen, die in der Weise verändert wurden, dass sich vorwiegend durch Inhibierung und Beseitigung der granulär gebundenen Stärke-Synthase (GBSS) Amylopektin bildet. Die Kartoffelstärke wird nach der Extraktion quervernetzt, verethert oder verestert. Die in der WO00/05319 offenbarte Kartoffelstärke wird schließlich als Tapetenklebstoff verwendet.

Die EP 0 981 968 betrifft ein Verfahren zur Verbesserung der rheologischen Eigenschaften von Lebensmitteln. Diese Verbesserung wird durch Zugabe einer gegen Salz stabilisierten Stärke erreicht, wobei die Stärke wiederum hauptsächlich aus Amylopektin besteht und von gentechnisch manipulierten Kartoffelpflanzen gewonnen wird.

Die EP 0 796 868 offenbart mit Hydroxylpropyl-Gruppen modifizierte quervernetzt Amylopektin-Kartoffelstärke und deren Verwendung als Lebensmittelzusatzstoff. Die in dieser Patentanmeldung offenbarte Stärke zeichnet sich vor allem durch ihre hohe viskositätsgebenden Eigenschaften aus.

Die WO98/33968 offenbart die Verwendung von chemisch modifizierten Amylopektin-Kartöffelstärke-Produkteh als Leimungsmittel zum Leimen von natürlichen bzw. synthetischen Garen.

Die WO97/04167 betrifft die Verwendung von Amylopektin-Stärke bei der Herstellung von Papier, um die üblicher Weise in der Nachbearbeitung verwendeten chemischen Reaktionsschritte zu ersetzen.

Die WÖ97/03573 offenbart die Verwendung von Amylopektin-Stärke als Füllmaterial bei der Konservierung von Lebensmittel.

Trotz des umfangreichen Standes der Technik auf dem Gebiet der Klebstoffe werden noch ständig weitere Stärkeprodukte für dieses Gebiet gesucht, um Verbesserungen einerseits in der Verfahrensführung bei der Herstellung und Anwendung sowie andererseits in den erhaltenen Eigenschaften der Klebstoffe zu erzielen. Besondere Bedeutung bekommt dies dadurch, daß die Klebstoffe auf Stärkebasis natürlichen Ursprungs und biologisch abbaubar, somit umweltfreundlicher als synthetische Polymerklebstoffe sind.

### Offenbarung der Erfindung

Die erfindungsgemäßen Vorwendung einer Klebstoff hargestellt von einer pulvriges Klebstoffvorprodukt bei Zigarettenverklebung, Wasseraktivierbaren Verklebung, Rundunwerklebung, Überlappungsverklebung Tapetenverklebung, Plalentverklebung, Buchbinderverklebung, Wellpappenverklebung, Sachverklebung Paper- oder Kartonkaschierung oder Spiralhülserwicklung, ist Verklebung wobei der pulvriges Klebstoffverprodukt ist auf Basis von Amylopektin-Stärke, gegebenenfalls in Kombination mit einem oder mehreren üblichen Zusatzmitteln, wie Rheologieverbesserern, Antischaummitteln, Stabilisatoren, Konservierungsmitteln und/oder weiteren, gegebenenfalls auf Nicht-Stärke-Basis beruhenden Klebstoffen bzw. Klebstoffvorprodukten, wobei die Amylopektin-Stärke eine Amylopektin-Kartoffelstärkemit mindestens 95% Amylopektin, durch physikalische, chemische oder enzymatische Verfahren abgebaut, und als Quellstärke enthalten ist.

Unter Amylopektin-Kartoffelstärke wird im vorliegenden Fall eine Kartoffelstärke mit einem Gehalt von mindestens 95%, vorzugsweise mindestens 98% Amylopektin verstanden

Die Amylopektin-Kartoffelstärke wird bevorzugt aus einer Kartoffel gewonnen, die zum Zweck der Amyloseinhibierung durch Züchtung oder molekularbiologische bzw. gentechnische Methoden verändert wurde. Vor allem wird die Amylopektin-Kartoffelstärke aus einer Kartoffel gewonnen, die durch antisense-Inhibition eines GBSS-Gens oder durch Cosuppression hinsichtlich der Amylosebildung inhibiert wurde.

### Eigenschaften der Amylopektin-Kartoffelstärke

Es zeigte sich, daß die erfindungsgemäße Amylopektin-Kartoffelstärke überraschenderweise eine deutlich höhere Klebkraft, nicht nur im Vergleich zu der üblichen amylosehältigen Kartoffelstärke, sondern vor allem auch im Vergleich zur Wachsmaisstärke hat.

Bei der Verklebung von Papier, wie z.B. bei industriellen Sackklebern, ergab sich, daß kaltwasserlösliche Amylopektin-Kartoffelstärke-Derivate, die carboxymethyliert und/oder z.B. mit Epichlorhydrin unterschiedlich vernetzt sind, den Derivaten von (Wachs)Maisstärke oder Kartoffelstärke deutlich überlegen sind.

Im später folgenden experimentellen Teil ist diese überlegene Klebkraft anhand von Ergebnissen aus Klebkraft-Tests deutlich zu ersehen

Auch Klarheit und Viskositätsstabilität der Amylopektin-Kartoffelstärke-Kleister sind besser als bei allen vergleichbaren Stärkeformen. Die Wasserretention ist ausgezeichnet, sodaß die Amylopektin-Kartoffelstärke-Kleister ein vorteilhaftes Penetrationsverhalten zeigen. Ebenso erleichtern die geringen Retrogradationserscheinungen das Arbeiten mit Amylopektin-Kartoffelstärke.

Die Amylopektin-Kartoffelstärke hat zum Unterschied von den Wachsgetreidestärken einen deutlich niedrigeren Gehalt an gebundenen Lipiden und Proteinen. Geruchs- und Schaumprobleme, wie sie oft beim Einsatz von Wachsgetreidestärken oder deren Derivaten vorkommen, werden beim Einsatz von Amylopektin-Kartoffelstärke kaum beobachtet. Im Gegensatz zu Wachsgetreidestärken enthält Amylopektin-Kartoffelstärke chemisch gebundene Phosphatgruppen und hat daher spezifische Polyelektrolyteigenschaften. Die Amylopektin-Kartoffelstärke weist große Vorteile bei der maschinellen Verarbeitung hinsichtlich ihres rheologischen Verhaltens auf.

Im Klebstoffbereich kommt die Stärke besonders in ihren abgebauten Formen zum Einsatz. Die Abbauvorgänge erfolgen auf mechanische, thermische, thermochemische oder enzymatische Weise. Dadurch werden die Stärkeprodukte auch kaltwasserlöslich bzw. kaltwasserquellbar gemacht.

Unter dem Begriff mechanischer Abbau versteht man den destrukturierenden Abbau der Stärke, der durch Hochscheren bei geeigneten Temperaturen mittels Z-Kneter, Kreuzbalkenrührer, hochdrehenden Rotor/Statormaschinen oder mittels Extruder erfolgen kann.

Thermischer Abbau, im speziellen die Dextrinierung, wird im sauren Milieu bei pH < 6,5, bevorzugt bei pH < 3,6, ohne Zusatz von Wasser durchgeführt. Als Katalysatoren können Salzsäure, Salpetersäure, Monochloressigsäure, Phosphorsäure oder Chlor eingesetzt werden, wobei die Verwendung von Salzsäure zu bevorzugen ist. Die Reaktionstemperatur beträgt bis zu 180°C, die Reaktionszeit kann bis zu 12 Stunden betragen. Je nach pH-Wert und Reaktionführung können Weiß-, Gelb- oder Canary-Dextrine sowie British Gums hergestellt werden.

Unter dem Begriff thermochemische Abbauvorgänge werden diejenigen Reaktionen zusammengefaßt, die durch den Zusatz von Chemikalien unter Erwärmung in wässerigem Medium ablaufen. Solche Abbauvorgänge können entweder sauer unter Verwendung von z.B. Salzsäure, Schwefelsäure, Phosphorsäure, Mineralsäuren, oxidativ unter Verwendung von z.B Wasserstoffperoxid, Natriumperborat, Ammoniumpersulfat, Peressigsäure, Kaliumpermanganat bzw. auch Kombinationen von diesen, sowie alkalisch oxidativ, wie beispielsweise mit Hypochlorit oder Wasserstoffperoxid, erfolgen.

Für den enzymatischen Abbau, der üblicherweise zu Maltodextrinen führt, werden vorzugsweise α-Amylasen eingesetzt. Die Reaktionstemperatur beträgt zwischen 30°C und 100°C und der Abbau kann bis zu 24 Stunden dauern. Die Beendigung des enzymatischen Abbaus erfolgt durch thermische oder chemische Denaturierung des Enzyms.

Kaltwasserlösliche abgebaute Amylopektin-Kartoffelstärke kann mit oder ohne Vorverkleisterung durch Walzentrocknung, Sprühtrocknung, u.s.w. hergestellt werden. Zur optimalen Entfaltung der Eigenschaften der kaltwasserlöslichen Stärke bzw. Stärkederivate ist der Aufschlußgrad von großer Bedeutung. Die Amylopektin-Kartoffelstärke bzw. ihre Derivate zeigen beim Aufschluß und der nachfolgenden Verwendung keine Klumpenbildung, Staubentwicklung und Entmischungsneigung und sind somit bei der praktischen Anwendung eines geeigneten Trockenproduktes auf Kleisterbasis nach dem Einrühren in Wasser optimal verarbeitbar.

Charakteristisch für die abgebauten Amylopektin-Kartoffelstärken ist die Eigenschaft, sogar bei hohen Feststoffkonzentrationen (bis zu 70% Amylopektin-Kartoffelstärke bei einer Brookfield-Viskosität von 400 - 30.000 mPas bei 25°C) eine ausgezeichnete Viskositätsstabilität aufzuweisen.

Kleister der Amylopektin-Kartoffelstärke zeigen im direkten rheologischen Vergleich mit den bislang im Klebebereich bevorzugt eingesetzten Stärken, wie z.B. Wachsmaisstärke, Maisstärke, Kartoffelstärke, etc., deutlich niedrigere Phasenverschiebungswinkel. Diese niedrigen Phasenverschiebungswinkel sind charakteristisch für Kurzzügigkeit und geringe Spritzneigung, d.h. sie zeigen das günstige Spritzverhalten der damit getesteten Klebstoffe, was wiederum bei der maschinellen Anwendung zum Verkleben von z.B. Papier notwendig und von großer Bedeutung ist. Vor allem im Zusammenhang mit der Zigarettenklebung sind diese vorteilhaften Eigenschaften der Amylopektin-Kartoffelstärke von Bedeutung.

Die abgebauten Stärken können ebenso wie die native Amylopektin-Stärke in verschiedenster Weise chemisch modifiziert werden. Dabei kann im allgemeinen der Substitutionsgrad (Derivatisierungsgrad DS), je nach Anwendung, zwischen 0,00001 und 3, vorzugsweise zwischen 0,001 und 2, betragen, wobei der Bereich von 0,005 bis 1 zu bevorzugen ist.

Aus der Literatur ist eine Vielzahl von Derivaten bekannt, deren Herstellung u.a. in dem bereits genannten Werk "Starch: Chemistry and Technology", R.L. Whistler, Kapitel X und XVII, 1984, und in "Modified Starches: Properties and Uses", herausgegeben von O.B Wurzburg, Kapitel 2-6, und 9-11, CRC Press, 1986, gut zusammengefaßt ist.

Aufgrund der Vielfalt der technischen Anwendungsmöglichkeiten der Amylopektin-Kartoffelstärke auf dem Klebstoffsektor lassen sich die verschiedensten Derivate für diese Zwecke einsetzen.

Von großer Bedeutung sind die Ester und Ether der Amylopektin-Kartoffelstärke. Man unterscheidet zwischen einfachen Stärkeestern und gemischten Stärkeestern, wobei der/die Substituent(en) des Esters verschiedenartig sein können: im Esterrest RCOO- kann der Rest R ein Alkyl-, Aryl-, Alkenyl-, Alkaryl- oder Aralkylrest mit 1 bis 17 Kohlenstoffatomen, bevorzugt mit bis 6 Kohlenstoffatomen, insbesonders mit ein oder zwei Kohlenstoffatomen, sein. Diese Produkte schließen die Derivate Acetat (hergestellt aus Vinylacetat oder Acetanhydrid), Propionat, Butyrat, Stearat, Phthalat, Succinat, Oleat, Maleinat, Fumarat und Benzoat ein.

Veretherungen erfolgen großteils durch Umsetzung mit Alkylenoxiden, die 2 bis 6 Kohlenstoffatome, bevorzugt 2 bis 4 Kohlenstoffatome, enthalten, insbesondere durch Verwendung von Ethylen- und Propylenoxid. Es können aber auch Methyl-, Carboxymethyl-, Cyanethyl- und Carbamoylether hergestellt und verwendet werden. Weitere Produkte umfassen die Alkylhydroxyalkyl-, Alkylcarboxyalkyl-, Hydroxyalkyl-carboxymethyl- und Alkylhydroxyalkyl-carboxymethyl-Derivate.

Daneben lassen sich aber auch kationische und anionische Verbindungen, die Amino-, Imino-, Ammonium-, Sulfonium- oder Phosphoniumgruppen oder auch beispielsweise die Phosphat- oder Sulfatgruppe enthalten, herstellen.

Neben den Estern und Ethern kann die native oder abgebaute Atnylopektin-Kartoffelstärke auch in unterschiedlichem Ausmaß vernetzt sein. Die Vernetzung erfolgt vorzugsweise durch Umsetzung mit Epichlorhydrin, gegebenenfalls im Gemisch mit (Poly)aminen, weiters mit Phosphoroxychlorid, Natrium-trimetaphosphat, Di-oder Polyepoxiden, gemischten Anhydriden von Carbonsäuren mit di- oder tribasischen Säuren, wie beispielsweise ein gemischtes Anhydrid aus Acetanhydrid mit Adipinsäure, Aldehyden oder aldehydfreisetzenden Reagenzien, wie beispielsweise N,N'-Dimethylol-N,N'-ethylenharnstoff.

Vernetzte Amylopektin-Kartoffelstärke an sich wurde bisher noch nicht beschrieben. Kleister dieser vernetzten Stärke zeigen bei geringerer Vernetzung eine sehr rasch ansteigende Viskosität, die bei stärkerer Vernetzung jedoch wieder abfällt. Die Retrogradation ist aber in beiden Fällen sehr gering, weshalb sich diese vernetzte Amylopektin-Kartoffelstärke als vorteilhaftes Material für die verschiedensten technischen Einsatzgebiete eignet. Amylopektin-Kartoffelstärke, die mit Epichlorhydrin, Adipinsäure, Aldehyden oder über ein Phosphat vernetzt ist, ist somit ebenfalls Gegenstand der vorliegenden Erfindung.

Weiters sind auch vernetzte und zusätzlich carboxymethylierte, cyanoethylierte, carbamoylierte und hydroxybutylierte Amylopektin-Kartoffelstärken vorteilhafte Stärkematerialien, die neu und Gegenstand der vorliegenden Erfindung sind. Ihre Herstellung erfolgt vorteilhaft in der Weise, daß die Amylopektin-Kartoffelstärke zuerst vernetzt und anschließend verethert wird.

Schließlich kann die Amylopektin-Kartoffelstärke auch als Pfropf-Polymer oder als Propf-Copolymer vorliegen, wie beispielsweise mit Produkten aus der Gruppe der Polyvinylalkohole, Acrylamide oder Monomere bzw. Polymere ausgehend von Erdölkohlenwasserstoffen. Dabei kann das Amylopelztin-Kartoffelstärke-Pfropf-(Co)-Polymerisat bevorzugt als Emulsionspolymerisat vorliegen.

Es können physikalische Mischungen der genannten Stärkederivate ebenso wie Stärkeprodukte, an denen mindestens zwei der genannten Derivatisierungsreaktionen vorgenommen wurden, in den erfindungsgemäßen Klebstoffen bzw. Klebstoffvorprodukten verwendet werden.

Bei der Herstellung der Stärkederivate bewirkt die höhere Kornstabilität des Amylopektins eine Vereinfachung der Herstellungstechnologie. Die Reaktionen im Slurry sind effizienter und mit höherer Umsetzung durchführbar.

Das Amylopektin ist weniger alkali- und weniger temperaturempfindlich als die Amylose, Derivatisierungsreaktionen, wie z.B. Veretherungs- oder Veresterungsreaktionen, sowie viele weitere Reaktionen, die bevorzugt zur Derivatisierung der Stärke eingesetzt werden, können dadurch bei kürzeren Reaktionszeiten intensiviert und der Einsatz von Verkleisterungsschutzsalzen kann deutlich herabgesetzt werden. Die Einsparung an Reaktionszeit und die deutliche Reduktion der Einsatzchemikalien äußert sich nicht nur wirtschaftlich in verminderten Herstellungskosten, sondern auch in ökologischer Hinsicht. So werden z.B. die Salzfrachten und die CSB-Belastung der Reaktionsabwässer merklich herabgesetzt.

Die Amylopektin-Kartoffelstärke kann auch durch Einwirkung von UHF (Ultrahochfrequenz)-Strahlung in Anwesenheit reaktionsfähiger Modifikatoren derivatisiert werden (vgl. EP-A1 0046347). Die UHF-Frequenz liegt im Bereich von 300 bis 300,000 Mhz, bevorzugt bei den Frequenzen 915, 2.450, 5.800 und 22.155 MHz. Grundsätzlich ist jede Derivatisierungsart mit diesem System möglich, bevorzugt sind jedoch die Veresterung, Veretherung, Hydrolyse, Vernetzung, Oxidation oder Dextrinierung sowie die Herstellung von Copolymeren. Die Reaktion dauert nicht mehr als 5 Minuten, meist sogar nur 1 bis 2 Minuten oder noch kürzer. Aufgrund der dabei auftretenden hohen Temperaturen kommt es auch gleichzeitig zur Verkleisterung der Stärke.

Ein wichtiger Aspekt, der bei der Herstellung und Anwendung von Klebstoffen auf Stärkebasis von Bedeutung ist, ist die Farbe und der Glanz der Kleister. Hier wiederum zeigt die Amylopektin-Kartoffelstärke in ihrer Kleisterform bzw. eingerührt im kaltwasserlöslichen Zustand ein geradezu typisches und sehr vorteilhaftes Verhalten, das besser ist als es von üblichen wachsigen Stärken bekannt ist.

Sowohl als native Stärken bzw. in derivatisierter und/oder abgebauter Form als auch in Form von Dextrinen haben die Lösungen ein überraschend klares Aussehen. Zur deutlicheren Charakterisierung dieses Effekts wurden an einem konventionellen Spektralphotometer Messungen der Lichtdurchlässigkeit von 4%-igen Kleistern durchgeführt. Die Messungen erfolgten im Bereich des sichtbaren Lichtes von 400 - 800 nm, speziell bei 600 nm, und einer Küvettenlänge von 1 cm. Herkömmliche Stärke, wie Maisstärke, zeigt als 4%-iger Kleister eine Lichtdurchlässigkeit von weniger als 10 %, während diese bei der Wachsmaisstärke schon bei knapp unter 30% liegt. Der 4%ige Kartoffelstärkekleister hat hingegen eine Transmission von über 81%. Die Kleister der Amylopektin-Kartoffelstärke weisen gegenüber den oben genannnten herkömmlichen Stärken eine noch wesentlich bessere Lichtdurchlässigkeit auf, die bei über 88% liegt. Da außerdem die Amylopektin-Kartoffelstärke z.B. gegenüber der gewöhnlichen Kartoffelstärke eine bessere Langzeitviskositätstabilität aufweist, haben die Kleister auch nach 48 Stunden dieselbe Klarheit und Transmission, während die Kleister der gewöhnlichen Kartoffelstärke nur mehr zu 60% lichtdurchlässig sind.

Vergleicht man dextrinierte Produkte auf Basis der Amylopektin-Kartoffelstärke mit denen herkömmlicher Stärken, so wird eine ähnliche Verbesserung beobachtet, wobei die gemessenen Lichtdurchlässigkeiten der Kleister aus dextrinierter Amylopektin-Kartoffelstärke bis zu 95% betragen.

Diese hervorragende Klarheit ist vor allem für die Herstellung von Briefmarken, aber auch von Kuverts und Klebebändern wichtig, da farblose wiederbefeuchtbare Klebstoffe vom Kunden unbedingt verlangt werden.

Wenn die kaltwasserlösliche Amylopektin-Kartoffelstärke als Kleister in Wasser eingerührt wird, zeigt sie ein gegenüber amylosereicher Kartoffelstärke deutlich besseres und rascheres Einrührverhalten sowie eine weitaus längere Viskositätsstabilität. In Langzeitversuchen über 60 Tage zeigten die Kleister der Amylopektin-Kartoffelstärke im Vergleich zu denen herkömmlicher Stärken, wie (Wachs)Maisstärke oder Kartoffelstärke, eine ausgezeichnete Lagerstabilität. Die Viskosität nahm nur um maximal 10% zu. Darüberhinaus haben die Kleister für denselben Zeitraum auch eine exzellente Farbstabilität.

Ein weiteres sehr wichtiges Kriterium für Klebstoffe, im speziellen für wiederbefeuchtbare Klebstoffe, ist die Klebezeit. Kenngröße für die Klebezeit ist die "Open Time". Unter "Open Time" versteht man jene Zeit, die ein Anwender benötigt, um auch bei langsamem Arbeiten mit dem Klebstoff zurechtzukommen. Diese Eigenschaften werden durch den Einsatz von Amylopektin-Kartoffelstärke in vollster Zufriedenheit erfüllt. Durch geeignete Zusätze, wie wasserunlösliche Polymere auf Acrylamid- oder Maleinsäurebasis, Weichmacher (Natriumnitrat etc.) und Stabilisatoren, kann den verlangten Anforderungen noch besser entsprochen werden Durch geeignete Zusammensetzungen ist es auch möglich, ein unerwünschtes Rollen des beklebten Papiers zu verhindern.

Weiters hat sich gezeigt, daß die Kleister auf Basis von Amylopektin-Kartoffelstärke überraschenderweise auch ein deutlich höheres Wasserrückhaltevermögen im Vergleich zu denen herkömmlicher Stärken haben. Im später folgenden experimentellen Teil sind die Ergebnisse von Messungen mit carboxymethylierter Amylopektin-Kartoffelstärke im Vergleich zu den entsprechenden Derivaten von Mais-, Kartoffel und Wachsmaisstärke angegeben. Das erhöhte Wasserrückhaltevermögen erlaubt die Erzielung einer besseren Verklebung.

In der EP 0 799 837 sind wässerige Zusammensetzungen auf Basis molekular disperser Amylopektin-Kartoffelstärke und grenzflächenaktiver Emulgatoren beschrieben, die hauptsächlich als Basis für Nahrungsmittel dienen und denselben eine glatte Gelstruktur verleihen. Es wird dabei ausdrücklich auf die Bildung der Komplexe (interaction products) hingewiesen, die sich zwischen der Amylopektin-Kartoffelstärke und den Emulgatoren bilden. Die Angaben über die Verwendung dieser Zusammensetzungen sind auf Kosmetik, Pharmazie, Tierfutter, aber auch Klebstoffe ausgedehnt.

In eigenen Untersuchungen wurde jedoch nachgewiesen, daß durch die Verwendung der grenzflächenaktiven Emulgatoren, wie zum Beispiel von Monoglyceriden, eine drastische Verminderung der Klebkraft auftritt. Dies ist dadurch erklärbar, daß es durch die Zugabe der komplexbildenden Emulgatoren zu einer Gelfestigung kommt, die der Klebkraft entgegen wirkt. Hingegen konnte festgestellt werden, daß bei Zusatz verdickender Stabilisatoren, wie beispielsweise von Cellulosen oder Polyvinylalkohol, die Klebkraft unvermindert erhalten bleibt. Durch den Einsatz dieser Stabilisatoren wird nicht nur eine Stabilisierung des Kleisters selbst bewirkt, sondern durch die fehlende Grenzflächenaktivität wird darüber hinaus auch die Klebrigkeit und die Klebezeit verbessert. Dieser Effekt ist besonders in der Anwendung mit der Amylopektin-Kartoffelstärke zu beobachten. Eine detailliertere Charakterisierung dieser Eigenschaften unter Angabe von technischen Daten ist im experimentellen Teil zusammengestellt.

Gemäß der vorliegenden Erfindung wird die Amylopektin-Kartoffelstärke in wässerigem Milieu formuliert und die Verklebung bzw. Haftung des Klebstoffs erfolgt durch Verdampfen bzw. Verdunsten des Wassers. Auszuschließen sind jedoch jene Klebeprozesse, wo das Abbinden durch eine chemische Reaktion oder die Verklebung lösungsmittelfrei abläuft.

### Spezielle Klebstoffe unter Einsatz von Amylopektin-Kartoffelstärke.

Amylopektin-Kartoffelstärke weist aufgrund ihrer beschriebenen Vorzüge optimale Möglichkeiten hinsichtlich der industriellen Herstellung verschiedenster Klebstoffe auf

### Zigarettenkleber

Ein bedeutender Sektor der Klebstoffindustrie ist die Zigarettenindustrie, wo durch maschinelle Verklebung bis zu 12.000 Zigaretten pro Minute verklebt werden. Bei der Zigarettenklebung unterscheidet man das Verkleben der Längsnaht und das Ankleben des Filteransatzes. Die Verwendung von Stärke für diese Kleber ist beschrieben. So wird u.a. in den Patentanmeldungen WO 95/05401 (American Maize), WO 95/02646 (American Maize) und WO 96/16135 (Henkel) der Einsatz von hydrolysierten bzw. enzymatisch abgebauten Stärken, teilweise mit hohem Amylopektin-Gehalt, zum maschinellen Verkleben von Zigaretten angegeben. Die Stärke wird hierbei sowohl unmodifiziert als auch als Derivat eingesetzt. Insbesondere sind vernetzte Produkte für diesen Zweck beschrieben, die durch Umsetzung mit einem gemischten Anhydrid aus Adipinsäure und Acetanhydrid gewonnen werden. In der Technik werden dann die Kleister bei hohem Feststoffgehalt (bis 60%) und gleichzeitig- relativ niedriger Viskosität (500 bis 15000 mPas) eingesetzt. Dadurch soll gewährleistet sein, daß der Klebstoff auch eine hohe Penetrationsrate hat.

Es erwies sich, daß die bisher für diesen Zweck nicht verwendete Amylopektin-Kartoffelstärke eine deutliche Verbesserung hinsichtlich gleichmäßigerer Nahtbreite und geringerer Ablagerungen an den Düsen ergab als dies bislang bei wachsigen Stärken beobachtet wurde. Die Klarheit der Amylopektin-Kartoffelstärke-Kleister ist besser und dauerhafter als bei allen anderen Stärken. Das Penetrationsverhalten im Papier ist hervorragend. Darüberhinaus bedingen die rheologischen Werte (Zügigkeit, geringes Spritzverhalten bei maschineller Anwendung) eine ausgezeichnete Verwendbarkeit von Amylopektin-Kartoffelstärke in schnelllaufenden Anlagen.

### Wasseraktivierbare Kleber (Briefmarken-, Etikettenklebstoffe)

Auf dem Gebiet der Etikettenklebung bzw. Flaschenetikettierung, d.h. für wasseraktivierbare oder wiederbefeuchtbare Kleber, sind Stärkeprodukte gefragt, die trotz hoher Feststoffkonzentration in einer niedrigen Viskosität vorliegen und neben einer hohen Viskositätsstabilität auch Farblosigkeit und einen exzellenten Glanz aufweisen. Darüberhinaus ist es noch erforderlich, daß die zu beklebenden Etiketten auf dem Glas nicht nur eine gute und rasche Klebkraft aufweisen, vielmehr muß auch eine Beständigkeit im wässerigem Milieu, z.B. in Kühlräumen mit Kondenswasser ("Schwitzen"), gegeben sein, während in Gegenwart von wässerigem Alkali diese Klebkraft wieder verloren gehen soll, wenn bei der Reinigung von Getränkeflaschen zur Neuetikettierung die alten Etiketten entfernt werden müssen.

In diesem Zusammenhang sind u.a. die Literaturstellen EP-A1 0319692 (Fuller) und US-PS 3,939,108 (National Starch) zu nennen, in welchen Stärke-Harz-Kompositionen zur Etikettenklebung vorgeschlagen werden.

In der PCT-Anmeldung WO 93/09145 (American Maize) wird die Verwendung von Weiß-Dextrinen auf Basis von Wachsmaisstärke für die Herstellung von Klebstoffen, speziell für Briefmarken, Kuverts etc., beschrieben. Hier spielen vor allem die Klarheit und Stabilität der Stärkeprodukte eine wesentliche Rolle.

Ebenfalls mit der Herstellung von wiederbefeuchtbaren Klebstoffen für Papier und Briefmarken beschäftigt sich die EP-A1 0041842 (Smith & McLaurin), wo chemisch behandelte und/oder amylosearme Stärke gemeinsam mit einer Polymeremulsion zur Anwendung kommt. Die eingesetzte Stärke ist Wachsmaisstärke oder herkömmliche Kartoffelstärke, deren Amylosegehalt auf chemisch-physikalischen Weg herabgesetzt wurde.

Amylopektin-Kartoffelstärke zeigt hier im Vergleich zu herkömmlichen Stärken geradezu ideales Verhalten, da die damit hergestellten Kleister von besonderer Klarheit und Stabilität sind Sie wird bei der Verwendung als Etikettenkleber entweder nativ oder modifiziert bzw. dextriniert eingesetzt. Dabei kommen grundsätzlich alle bekannten Derivate zur Anwendung, insbesondere auch cyanoethylierte und abgebaute Produkte. Daneben läßt sich die Stärke aber auch als Pfropf-Copolymerisat einsetzen. Darüberhinaus können noch Additive, wie Polymere (beispielsweise saure Harze) oder Casein sowie Borax, anorganische Verdickungsmittel, Konservierungsmittel und starke Basen zugesetzt werden. Die Klebstoffmischungen werden bei Temperaturen von 70 bis 98°C, bevorzugt bei 90 bis 95°C verkleistert.

Im Zuge der Herstellung verschiedener Klebstoffmischungen für die Etikettenklebung wurde die Qualität des Produktes mittels der bekannten Methoden "Ice-Proof-Test" bzw. "Alkali Removability Test" beurteilt.

Beim "Ice-Proof-Test" werden die Etiketten mit dem Testklebstoff auf die Flaschen geklebt. Die Flaschen werden zunächst 24 Stunden bei Raumtemperatur getrocknet, dann weitere 48 Stunden in ein 4°C-kaltes Wasserbad eingetaucht. Die Bewertung erfolgte anhand von zehn in gleicher Weise behandelten Flaschen dahingehend, ob die Klebung dauerhaft war oder sich die Etiketten ganz oder teilweise ablösten.

Die Ergebnisse zeigten, daß bei Verwendung von Amylopektin-Kartoffelstärke die Wasserbeständigkeit der geklebten Etiketten im wesentlichen besser war als bei Verwendung der üblichen Wachsstärken, bei denen fallweise an den Ecken der Etiketten Auflösungserscheinungen auftraten.

Im "Alkali Removability Test" werden die etikettierten Flaschen bei ca. 50°C in ein 4%iges Laugenbad getaucht. Bei diesem Test kann die industrielle Schnellreinigung der etikettierten Flaschen hervorragend nachgestellt werden. Wiederum wurden zur Bewertung jeweils zehn Flaschen in gleicher Weise behandelt, wobei zur positiven Beurteilung des Tests die Etiketten aller zehn Flaschen im geforderten Zeitraum problemlos entfernt sein sollten. Auch hier bestätigten die auf Amylopektin-Kartoffelstärke basierenden Etikettenkleber ihre Überlegenheit. Die Etiketten ließen sich im Vergleich zu solchen, die mit Klebern auf Basis herkömmlicher Wachsstärken geklebt waren, leichter und rascher abwaschen, sodaß der erfindungsgemäße Kleber als wirklich effizient zu betrachten ist.

### Rundumverklebung und Überlappungsverklebung

In der PCT-Patentanmeldung WO 97/00298 (Henkel) wird die Anwendung von auf Stärke-Basis hergestellten Klebern in der Rundumetikettierung von Kunststoffbehältern beschrieben. Für diesen Anwendungszweck ist ein Mitnahineklebstoff und ein Überlappungsklebstoff erforderlich, wobei der Mitnahmeklebstoff nur im feuchten Zustand auf der Oberfläche des zu beklebenden Körpers haftet und der Überlappungskleber die Etikettenränder miteinander verklebt.

Gefäße, die in dieser Art etikettiert werden, können aus Glas, Aluminium etc. bestehen. Wesentlich ist, daß die Etiketten vor der Wiederverwendung der Gefäße möglichst rasch und rückstandsfrei abgezogen werden können

Aufgrund der außerordentlichen Naßklebkraft der Amylopektin-Kartoffelstärke erfolgt die maschinelle Aufbringung der Etiketten problemlos und rutschfest, wobei die gute Verarbeitbarkeit auf die guten rheologischen Eigenschaften (kein Fadenziehen) zurückzuführen ist. Im Endstadium der Trocknung zeigt der auf Amylopektin-Kartoffelstärke basierende Klebstoff dann praktisch keine Haftung am Kunststoffbehälter, womit eine spätere-leichte Entfernung der Etikette gewährleistet ist. Die Amylopektin-Kartoffelstärke bzw. ihre Derivate müssen hierbei in der wasserlöslichen Form vorliegen, sie wird bis zu 50 % eingerührt. Zur Verbesserung der Handhabung des Klebers können geeignete Additiva, wie Entschäumer, Konservierungsmittel, Balsam- und/oder Tallharze, zugesetzt werden.

### Tapetenkleber und Plakatkleber

Ein weiteres großes Gebiet für stärkehaltige Kleber sind Tapetenkleber und Kleber für Beschichtungen wandartiger Untergründe. In den PCT-Anmeldungen WO 88/10273 (Staley) und EP-A2 0311873 (Henkel) sind hiefür Klebstoffe beschrieben, die bevorzugt aus kaltwasserlöslichen bzw. kaltwasserquellenden, derivatisierten und amylopektinreichen Stärken gebildet werden. Zur Erzielung der notwendigen guten Naßverklebung und guten Rutschfestigkeit werden Additive, wie Cellulose, Methacrylate oder Acrylamide, zugesetzt.

Tapetenkleber sollen eine rasche Erstverklebung bei gleichzeitig hervorragender Bindungskraft an den Wänden erreichen. Es soll bei der Verarbeitung möglichst wenig Klumpenbildung, Staubentwicklung und Entmischungsneigung auftreten.

Der Einsatz von Amylopektin-Kartoffelstärke bietet sich bei der Herstellung von Tapetenkleistern bzw. als Adhäsionsklebstoff für Tapeten und Plakate besonders an, da die veresterten, veretherten, im Speziellen die vernetzten und/oder hydroxypropylierten und/oder carboxymethylierten und/oder oxypropylsulfonylierten Derivate mindestens zu 90 %, bevorzugt aber zu 99 % kaltwasserlöslich gemacht werden können und eine rasche Erstverklebung bei gleichzeitig hervorragender Bindungskraft an den Wänden aufweisen. Daneben lassen sich die kaltwasserlöslichen bzw. kaltwasserquellbaren Amylopektin-Kartoffelstärke-Derivate besonders gut und in jedem Verhältnis mit Celluloseetherderivaten, wie z.B. MC, MEC, MHPC oder CMC mischen.

### Wellpappenkleber

Eines der größten Anwendungsgebiete von Stärkeklebstoffen ist das der Wellpappenindustrie. Seit im Jahre 1936 durch die amerikanische Firma Stein und Hall ein Stärkeklebstoff fur die Wellpappe patentiert wurde, ein Kleber, der auf einem ungewöhnlichen Prinzip einer Mischung von gelbildendem und nicht gelbildendem Stoff beruht, wurden weltweit eine Reihe von Verfahren mit zum Teil unterschiedlichsten Stärketypen hiefür entwickelt. Von Anfang an aber zeigte sich, daß auf diesem Gebiet die Maisstärke der Kartoffelstärke überlegen ist. Die Verwendung von reiner Kartoffelstärke ergab, daß diese Klebstoffe eine wesentlich höhere Thixotropie aufwiesen, leichter gelierten, geringere Wasserbeständigkeit zeigten und größere Feststoffmengen erforderlich machten. Aufgrund dieser Eigenschaften verlor die Kartoffelstärke hinsichtlich ihres Einsatzes als Wellpappenkleber an Bedeutung, während andere Stärken, wie Maisstärke, aber auch amylosereiche Stärken, bevorzugt wurden.

Andererseits hat es sich auch gezeigt, daß die Herstellung vielschichtiger Wellpappen mit Hilfe amylopektinreicher Stärken sehr gute Ergebnisse liefert. So wird im US-Patent 3.912.531 (Anheuser-Busch) die Verwendung dünnkochender, sauer abgebauter Wachsstärken als Trägerstärken beschrieben. Zum Zeitpunkt der Anmeldung dieses Patentes (1974) standen als Wachsstärken allerdings ausschließlich Wachsmaisstärke, Wachsreisstärke oder Wachsgerstenstärke zur Verfügung.

Es zeigte sich, daß die Amylopektin-Kartoffelstärke im Gegensatz zur gewöhnlichen Kartoffelstärke gerade jene Eigenschaften hat, die man an den Wellpappenklebern besonders schätzt. So hat sie eine geringstmögliche Thixotropie, geliert nicht leicht und es kann, wie später noch gezeigt wird, die Feststoffkonzentration an primärer und/oder sekundärer Stärke merklich gesenkt werden.

Im allgemeinen kann der Wellpappenkleber auf zwei Arten hergestellt werden. Die erste Möglichkeit ist unter dem Namen Stein-Hall-Verfahren bekannt und kann auf zwei verschiedenen Arten erfolgen. Die erste Variante umfaßt zunächst die Verkleisterung der primären Stärke durch Umsetzung in wässerigem Alkali bei erhöhten Temperaturen mit anschließendem Einrühren einer sekundären Stärke, die wiederum nativ oder auch derivatisiert bzw. abgebaut sein kann, sowie die Zugabe einiger Additive. Diese Zusätze können je nach Bedarf und Anwendung u.a. Polyvinylalkohol, Borax, Cellulose, Harze, Wachs, Konservierungsmittel, Weichmacher, Peptisierungsmittel, Füllstoffe, Verdicker und Netzmittel sein, die die Penetration des Klebstoffs in die Wellpappe steuern.

Die andere Variante der Herstellung von Wellpappenklebern umfaßt zunächst das Anrühren einer kaltwasserlöslichen Stärke bzw. das Verkleistern, das thermisch oder durch Zusatz von Alkali erfolgt, und anschließend die Zugabe zu einer vorgefertigten Mischung (Prämix mit der sekundären Stärke). Dieser Prämix kann alle Komponenten beinhalten, wie sie schon oben erwähnt wurden.

Das zweite Verfahren wird als No-Carrier bezeichnet (US-Patent 3.355.307, EP 386911). Bei diesem Verfahren wird eine Stärke in Wasser suspendiert. Anschließend wird der Slurry bei pH > 8 so lange erhitzt bis eine Stein-Hall-Viskosität von etwa 20 bis 90 sec. erreicht wird. Dadurch wird die Stärke zu einem gewissen Ausmaß verkleistert. Die Reaktion wird durch die Zugabe von beispielsweise Borsäure gestoppt. Wie auch in den anderen Verfahrensvarianten können durch diverse Zusätze die Wellpappenkleber spezifisch verbessert werden.

Auf Basis dieser beiden unterschiedlichen Verfahren gibt es eine Vielzahl von Varianten, um einen Wellpappenkleber bestimmter Viskosität herstellen zu können. Einer dieser Möglichkeiten ist das sogenannte Minocar-Verfahren, wo aber im Unterschied zum No-Carrier-Verfahren durch Zugabe von nativer Stärke in Gegenwart von Addtiva, wie beispielsweise Borax, die Verkleisterung gestoppt wird.

Die Amylopektin-Kartoffelstärke weist als primäre Stärke eine hervorragende Rohbindefestigkeit ("Green Bond") auf. Der "Green Bond" ist jene Rohfestigkeit, die die Wellpappenteile zusammenhält, bevor die eigentliche Verklebung durch Hitze erfolgt. Gerade diese Trägerstärke ist für den Gesamtklebstoff von Bedeutung, da sie nicht nur die Bindefestigkeit sondern auch die Abbindegeschwindigkeit des Klebstoffs steuert. Denn je höher der "Green-Bond" ist und je schneller die Verklebung erfolgt, desto rascher kann maschinell gearbeitet werden. Untersuchungen zeigten, daß die Amylopektin-Kartoffelstärke gegenüber den herkömmlichen Stärken ein verbessertes Klebeverhalten aufweist, auch wenn die sekundäre Stärke keine amylopektinreiche Stärke ist. Die diesbezüglichen Messungen sind im später folgenden experimentellen Teil beschrieben.

Die Wellpappenkleber enthalten bevorzugt als primäre Stärke die Amylopektin-Kartoffelstärke, die nativ aber auch derivatisiert und/oder abgebaut bzw. dextriniert sein kann. Die sekundäre Stärke hingegen kann entweder eine herkömmliche native Stärke, von amylosereich bis amylopektinreich, inklusive der Amylopektin-Kartoffelstärke, sein. Auch diese kann entsprechend den Anforderungen nativ, aber auch derivatisiert und/oder abgebaut bzw. dextriniert eingesetzt werden.

Ein weiterer wichtiger Gesichtspunkt hinsichtlich des Einsatzes der Amylopektin-Kartoffelstärke als Wellpappenkleber ist die Wasserresistenz. Diese wird nach dem TAPPI Standard UM 802 zur Bestimmung der "wet-pin adhesion" durchgeführt. Hierbei wird das verklebte Wellpappenpapier zunächst 24 Stunden bei einer Luftfeuchtigkeit von 50% getrocknet, anschließend weitere 24 Stunden in ein 22°C kaltes Wasser getaucht und dann dessen Klebkraft, ähnlich wie beim Texture-Analyser, durch Auseinanderreißen des Papiers ermittelt. Konkrete Ergebnisse dazu finden sich im experimentiellen Teil.

Diese Methode ist sehr wichtig bei der Untersuchung von Wellpappenpapieren, die hohen Luftfeuchtigkeiten bzw. Nässe ausgesetzt sind. Um zu gewährleisten, daß die Klebkraft in Gegenwart von Wasser erhalten bleibt, ist, wie schon oben erwähnt, der Zusatz von Harzen oder auch Latexprodukten wünschenswert, allerdings nicht unbedingt notwendig. Die eingesetzten Harze basieren zumeist auf Formaldehyd-Kondensaten. Es zeigte sich aufgrund der Ergebnisse dieses Testverfahrens, daß Mischungen mit Amylopektin-Kartoffelstärke als Trägerstärke ein besonders ideales Verhalten aufweisen.

### Buchbinderkleber

Die EP-A2 0727469 (National Starch) beschreibt die Verwendung von dextrinierter Stärke in der Buchbinderei. Die verwendeten Kleber bestehen dabei aus einem mit Dextrin emulgierten Polymer-Latex auf Basis Ethylen-Vinylacetat-Copolymer mit Borax und weiteren Füllstoffen.

Buchbinderkleber müssen möglichst resistent gegen enzymatischen und/oder bakteriellen Befall sein, weshalb sie mit bekannten Konservierungsmitteln kompatibel sein müssen.

Die Amylopektin-Kartoffelstärke wird bevorzugt in ihrer abgebauten Form, insbesondere als Dextrin, eingesetzt. In einer anschließenden Emulsions-Polymerisation wird die dextrinierte Amylopektin-Kartoffelstärke mit (Ethylen)-Vinylacetat zur Herstellung eines Latex-Klebstoffs umgesetzt. Durch geeignete Zusätze wie Borax, Weichmacher und Füllstoffe können die Eigenschaften noch verbessert werden. Der Buchbinderklebstoff auf Basis der Amylopektin-Kartoffelstärke zeichnet sich gegenüber der Verwendung herkömmlicher Stärke dadurch aus, daß er hinsichtlich seiner Kleisterklarheit sowie seiner raschen und exzellenten Klebkraft auch den bekannten Tierklebstoffen bzw. synthetischer Klebern überlegen ist.

### Sackkleber

Für dieses industrielle Anwendungsgebiet sind kurzzügige, rasch und stark klebende Klebstoffe erforderlich. Stärkekleber dieser Art liegen vorzugsweise in kaltwasserlöslicher Form vor.

Durch die besonders gute Klebkraft und die hervorragende Kurzzügigkeit weisen carboxymethylierte Amylopektin-Kartoffelstärken, die auch beispielsweise mit Epichlorhydrin vernetzt sein können, jene Eigenschaften auf, die für diesen Industriezweig erforderlich sind. Grundsätzlich können aber alle bekannten Derivate, wie Ether, Ester, Alkyle zur Anwendung kommen. Die Kurzzügigkeit wird mittels Rheometer gemessen, während die Klebkraftbestimmung im Reißtest vorgenommen wurde. Es zeigte sich eine raschere und sauberere Verklebung mit Hilfe der Amylopektin-Kartoffelstärke gegenüber herkömmlichen Stärken.

### Klebstoffe in der Papier-und Kartonkaschierung:

Das Vereinigen einer Papierbahn und einer vorgefertigten Kunststoffbahn oder metallischen Folie wird als Kaschieren bezeichnet. Für diesen Anwendungsbereich sind Klebstoffe mit niedriger Penetration, hoher Klebkraft und guter "open time" erforderlich.

Der Einsatz von Amylopektin-Kartoffelstärke bei der Verklebung von mehrschichtigen Materialien, wie es bei der Kaschierung der Fall ist, kann aufgrund ihrer im Vergleich zu herkömmlichen Stärken ausgeprägten Eigenschaften nur befürwortet werden. Die Amylopektin-Kartoffelstärke, die in ihrer abgebauten Form, insbesondere als Dextrin zur Anwendung kommt, zeigt vorteilhafterweise eine niedrige Klebstoff-Penetration, hohe Klebkraft und eine optimale "open time". Darüberhinaus ist ihre Endklebkraft ausgezeichnet Weiters kann die Amylopektin-Kartoffelstärke auch in herkömmlicher Weise derivatisiert, beispielsweise auch kationisiert, vorliegen. Zur Verbesserung spezifischer Anwendungen können noch Harze, Polyvinylalkohole oder Füllstoffe zugesetzt werden.

### Kleber für Spiralhülsenwicklung:

Die Spiralhülsenwicklung kann auf zwei Arten erfolgen, entweder durch Auftragen des Klebstoffs in der Hitze bei etwa 50°C nach dem sogenannten "Spiral Type" oder mittels Kaltverklebung nach dem "Convolute Type". Anwendungen finden sich in der Herstellung von aus Papier bestehenden Spiralhülsen, Dosen, Rollen oder Kegeln.

Es erwies sich, daß die Amylopektin-Kartoffelstärke, bevorzugt in dextrinierter Form, aufgrund der bereits bekannten erstklassigen Klebkraft sowie hervorragenden rheologischen Eigenschaften in der maschinellen Verarbeitung für die Spiralhülsenwicklung den herkömmlichen Stärken, speziell auch den wachsigen Stärken, überlegen ist. Als Zusätze kommen Harze, aber auch Borax oder Alkali, zur Anwendung.

### Experimenteller Teil:

### Viskosität, Rheologie

In der folgenden Tabelle sind zur Veranschaulichung der günstigen rheologischen Eigenschaften einige Meßwerte zusammengestellt, die auf einem Bohlin CS-Rheometer gemessen wurden:

**Tabelle 1:**

| Stärke | Konzentration | Brookfield-Viskosität [mPas] | Phasenverschiebungswinkel [°] | | |
|---|---|---|---|---|---|
| | | 20°C, 100Upm | 1 rad/s | 10 rad/s | 50 rad/s |
| cm-KS | 20% | 6080 | 67 | 58 | 51 |
| cm-WMS | 20% | 4720 | 53 | 56 | 54 |
| oxab-hp-KS | 30% | 5440 | 58 | 56 | 49 |
| oxab-hp-WMS | 30% | 4310 | 32 | 34 | 29 |
| dex.KS | 30% | 3990 | 83 | 78 | 72 |
| dex. WMS | 30% | 3740 | 46 | 41 | 49 |
| sab WMS | 30% | 4260 | 70 | 60 | 56 |
| cm-AP-KS | 20% | 3120 | 6 | 10 | 8 |
| oxab-hp-AP-KS | 30% | 4130 | 11 | 8 | 10 |
| sab AP-KS | 30% | 4780 | 5 | 7 | 7 |
| dex. AP-KS | 30% | 5300 | 14 | 12 | 15 |

| | | | | | |
|---|---|---|---|---|---|
| AP-KS Amylopektin-Kartoffelstärke cm carboxymethyliert KS Kartoffelstärke hp hydroxypropyliert WMS Wachsmaisstärke dex dextriniert oxab oxidativ mit NaOCl abgebaut sab sauer abgebaut | | | | | |

Aus dieser Tabelle ist ersichtlich, daß 20%ige bis 30%ige Kleister von Derivaten der Amylopektin-Kartoffelstärke einen gegenüber herkömmlichen Vergleichsstärken deutlich niedrigeren Phasenverschiebungswinkel von 4° bis maximal 15° zeigen. Diese niedrigen Phasenverschiebungswinkel weisen auf die günstige Kurzzügigkeit und geringe Spritzneigung der Kleister auf Basis Amylopektin-Kartoffelstärke hin. Durch diese Eigenschaften sind die Kleister besonders gut für den Einsatz auf Hochgeschwindigkeitsanlagen, wie sie z B. bei der Herstellung von Zigaretten in Anwendung sind, geeignet.

### Viskositätsstabilität

In Langzeitversuchen über 30 Tage, zeigten die Kleister der Amylopektin-Kartoffelstärke im Vergleich zu den herkömmlichen Stärken, wie (Wachs)Maisstärke oder Kartoffelstärke, eine besonders gute Lagerstabilität. Die Viskosität nahm nur um maximal 10% zu. Darüber hinaus haben die Kleister für den selben Zeitraum auch eine exzellente Farbstabilität

Die verschiedenen Stärken wurden jeweils in gleicher Weise mit Salzsäure abgebaut und anschließend hydroxypropyliert. Die hergestellten Kleister hatten einen Feststoffgehalt von 30%. Die Brookfield-Viskosität wurde bei 23°C gemessen und ist in mPas angegeben.

Das folgende Diagramm 1 zeigt für verschiedene Stärkekleister die bei 100 Upm gemessene Brookfield-Viskosität in Abhängigkeit von der Zeit.

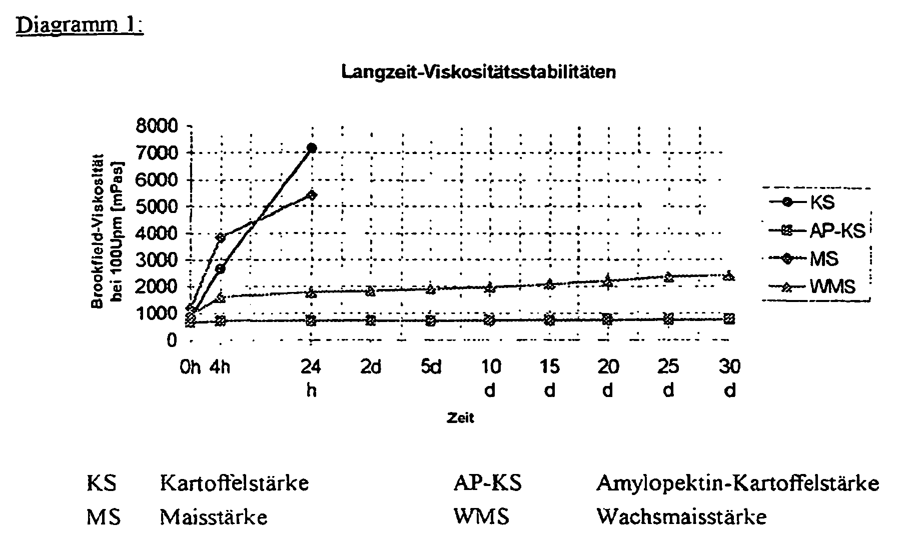

Die Kurvenverläufe zeigen deutlich, daß die gewöhnliche Kartoffel- und Maisstärke bei weitem nicht die Viskositätsstabilität aufweisen wie amylopektinreiche Stärken. Im Vergleich zur Wachsmaisstärke ist die Amylopektin-Kartoffelstärke jedoch aufgrund der noch besseren Langzeit-Viskositätsstabilität zu bevorzugen.

### Klebkraft

Die Bestimmung der Klebkraft erfolgte in Abhängigkeit von der Zeit mittels Texture Analyser in folgender Weise:

0,1 g Kleber (Brookfield Viskosität bei 30°C/20 upm 1000 - 20000 mPas) wurden mit einem ¾ Zoll Naturhaarpinsel auf ein 30x70 mm großes einlagiges Wellenstoffpapier aufgetragen. Darauf wurde ein zweites Papierstück aufgelegt und das zusammengeklebte Laminat mit 2,5 kg beschwert. Entsprechend den zeitlichen Vorgaben wurde das Papier an den Enden aufgebogen, in den Texture Analyser eingespannt und mit konstanter Kraft auseinandergerissen. Folgende Meßparameter wurden am Texture Analyser eingestellt:

| | |
|---|---|
| Mode: | Measure Force in Tension |
| Option: | Return to Start |
| Force Units: | Grams |
| Distance Format: | mm |
| Pre-Test Speed: | 2.0 mm/s |
| Test Speed: | 10.0 mm/s |
| Post-Test Speed: | 10.0 mm/s |
| Distance: | 120.0 mm |

Die Messungen der Klebkraft der 15 beklebten Streifen erfolgte hintereinander in Abständen von 1 min.. Die Beurteilung der getrennten Klebestellen bzw. des abgerissenen Papieres erfolgte visuell. Als Qualitätsmerkmal gilt dabei der Zeitpunkt des Faserrisses im Papier. Je rascher die beiden Papierstreifen aneinander kleben, umso früher reißt die Papierfaser.

Die folgende Tabelle 2 gibt neben den Werten von Viskosität und Phasenverschiebungswinkel auch die Werte für die Klebkraft an.

**Tabelle 2: Meßdaten 15%iger Kleister**

| Stärke | carboxy-methyl | Epivernetzt | Brookfield-Viskosität | Phasenverschiebungswinkel [°] | | | Klebkraft |
|---|---|---|---|---|---|---|---|
| | | | 20°C, 100Upm, [mPas] | 1 rad/s | 10 rad/s | 50 rad/s | Reißzeit [min] |
| KS | x | | 4140 | 71 | 61 | 54 | 8 |
| KS | | x | 2710 | 22 | 15 | 18 | > 15 |
| KS | x | x | 6400 | 16 | 13 | 16 | > 15 |
| MS | x | | 8400 | 32 | 38 | 39 | 9 |
| MS | | x | 3740 | 12 | 9 | 12 | > 15 |
| MS | x | x | 2740 | 11 | 9 | 13 | > 15 |
| WMS | x | | 1790 | 74 | 67 | 61 | 10 |
| WMS | | x | 2860 | 59 | 50 | 49 | 10 |
| WMS | x | x | 3080 | 59 | 51 | 48 | 8 |
| AP-KS | x | | 2200 | 11 | 8 | 9 | 2 |
| AP-KS | | x | 3300 | 13 | 7 | 10 | 5 |
| AP-KS | x | x | 3610 | 6 | 7 | 7 | 4 |

| | | | | | | | |
|---|---|---|---|---|---|---|---|
| KS Kartoffelstärke AP-KS Amylopektin-Kartoffelstärke MS Maisstärke WMS Wachsmaisstärke | | | | | | | |

Durch die Ergebnisse des Reißtests konnte festgestellt werden, daß die auf Basis Amylopektin-Kartoffelstärke hergestellten Derivate eine gegenüber herkömmlichen Stärkederivaten bei weitem verbesserte Klebkraft aufweisen. Während die gewöhnliche Kartoffelstärke und die Wachsmaisstärke eine gemessene Reißzeit von 8 bis >15 aufweisen, liegen die Werte der Amylopektin-Kartoffelstärke deutlich darunter.

### Einfluß von Additiven auf die Klebkraft

Es wurde die Wirkung von grenzflächenaktiven Emulgatoren und von Stabilisatoren im Sinne der vorliegenden Erfindung auf die Klebkraft und die Viskosität untersucht und verglichen. Zu diesem Zweck wurde ein oberflächenaktiver Emulgator, ein kommerziell erhältlicher Kombinationsemulgator auf Basis von Monoglycerinstearat, sowie ein Polyvinylalkohol-Stabilisator getestet. Weiters wurden zum Vergleich analoge Mischungen ohne Zusatz von Emulgator bzw. Stabilisator untersucht. Für die Untersuchungen wurden unterschiedlich derivatisierte Quellstärken 15%ig eingerührt, wobei 1% Emulgator bzw. Stabilisator (bezogen auf Trockenstärke) zugegeben wurde. Anschließend wurde die Klebkraft in Abhängigkeit von der Zeit mittels Texture Analyser ermittelt und die Viskosität mittels Brookfield bei 100 Upm und 20°C gemessen.

**Tabelle 3: Meßdaten 15%iger Kleister unter Zusatz eines Emulgators bzw. Stabilisators**

| Stärke | Emulgator/ Stabilisator | Brookfield-Viskosität | Brookfield-Viskosität | Klebkraft |
|---|---|---|---|---|
| | 1%/kg Trockenstärke | | nach 24h | Reißzeit |
| | | [Pas] | [mPas] | [min] |
| cm AP-KS | Glycerinstearat | 2000 | 13250 | 7 |
| cm AP-KS | Polyvinylalkohol | 2100 | 2440 | 2 |
| cm AP-KS | - | 2200 | 2280 | 2 |
| eip AP-KS | Glycerinstearat | 3220 | 12190 | 13 |
| epi AP-KS | Polyvinylalkohol | 3170 | 3370 | 5 |
| epi AP-KS | - | 3300 | 3410 | 5 |
| cm KS | Glycerinstearat | 4740 | 7260 | > 15 |
| cm KS | Polyvinylalkohol | 4630 | 4980 | 8 |
| cm KS | - | 4740 | 5120 | 8 |
| epi KS | Glycerinstearat | 2940 | 6300 | > 15 |
| epi KS | Polyvinylalkohol | 2840 | 2920 | 12 |
| epi KS | - | 3480 | 3220 | > 15 |

| | | | | |
|---|---|---|---|---|
| AP-KS Amylopektin-Kartoffelstärke cm carboxymethyliert KS Kartoffelstärke epi epivernetzt | | | | |

Die Ergebnisse der Untersuchungen machen deutlich, daß grenzflächenaktive Emulgatoren, wie beispielsweise der verwendete Glycerid-Emulgator, eine deutliche Verminderung der Klebkraft bewirken. Darüber hinaus zeigten solche Mischungen keine Lanzeit-Viskositätsstabilität. Besonders bemerkenswert ist, daß es schon bei Zugabe von geringen Mengen (<1%) an grenzflächenaktivem Emulgator zu einer spürbaren Verschlechterung in der Qualität des Klebstoffs kommt.

Im Gegensatz dazu konnte überraschenderweise festgestellt werden, daß die Stabilisatoren, die keine grenzflächenaktiven Eigenschaften haben, wie beispielsweise Polyvinylalkohol, mit Stärke geradezu ein ideales Verhalten hinsichtlich der Klebkraft und Viskosität aufweisen. Dies wird vor allem bei Verwendung gemeinsam mit Amylopektin-Kartoffelstärke beobachtet. Die Klebkraft von Mischungen mit herkömmlichen Stärken ändert sich nur wenig, während mit der erfindungsgemäß verwendeten Amylopektin-Kartoffelstärke sogar eine Verbesserung hinsichtlich Klebrigkeit, aber auch hinsichtlich der "open time" erzielt werden konnte. Im Vergleich zur herkömlichen Kartoffelstärke zeigt die Amylopektin-Kartoffelstärke auch eine deutlich längere Langzeit Viskositätsstabilität.

### Klarheit

Ein wesentlicher Faktor für die bevorzugte Verwendung von Amylopektin-Kartoffelstärke in der Verklebung von Zigaretten oder als wiederbefeuchtbarer Klebstoff ist ihre außerordentliche Kleisterklarheit, wodurch eine makellose Verklebung gewährleistet ist.

Diese Kleisterklarheit ist besonders bemerkenswert, da sie im Vergleich mit den herkömmlichen Stärken auch über einen längeren Zeitraum erhalten bleibt.

Zur Untersuchung der Kleisterklarheit wurden 2%ige bzw. 4%ige Stärken im Brabender standardmäßig aufgekocht (Haltezeit 15 min bei 95°C) und anschließend auf 50°C abgekühlt. Die Kleister wurden autoklaviert und nach Abkühlen auf Raumtemperatur wurde ihre Klarheit bei 600 nm am Shimadzu-Spektralphotometer UV-160 bestimmt.

**Tabelle 4A: Untersuchung 2%iger Stärken**

| Stärkeart | nach Abkühlen | nach 24h RT | und weiteren 24h bei 4°C |
|---|---|---|---|
| KS | 0,077 | 0.080 | 0,375 |
| MS | 1,528 | 1,644 | 2,166 |
| WMS | 0,304 | 0,317 | 0,367 |
| AP-KS | 0,052 | 0,052 | 0,065 |

**Tabelle 4B: Untersuchung 4%iger Stärken**

| Stärkeart | nach Abkühlen | nach 24h RT | und weiteren 24h bei 4°C |
|---|---|---|---|
| KS | 0,104 | 0,110 | 2,066 |
| MS | 2,075 | 2,276 | 2,485 |
| WMS | 0,514 | 0,569 | 0,729 |
| AP-KS | 0,057 | 0,057 | 0,217 |

Die Ergebnisse zeigen deutlich, welchen großen Vorteil die Amylopektin-Kartoffelstärke gegenüber den übrigen Stärken zeigt. Hinsichtlich Kleisterklarheit konnte nur die gewöhnliche Kartoffelsstärke ähnlich gute Ergebnisse erzielen, jedoch zeigte diese aufgrund der schlechten Langzeitstabilität schon nach kurzer Zeit eine deutliche Verschlechterung in der Kleisterklarheit im Vergleich zur Amylopektin-Kartoffelstärke, und zwar um etwa das 10-fache.

### Wasserrückhaltevermögen

Ein weiterer wichtiger Faktor in der Beurteilung eines Klebstoffs ist sein Wasserrückhaltevermögen. Die Untersuchungen des Wasserrückhaltevermögens wurden mittels eines Wasser-Retentiometers (VENEMA Automation) durchgeführt. Das Meßprinzip beruht darauf, daß auf die Elektrodenoberfläche (T = 30°C) der Klebstoff (Kleister) aufgebracht und anschließend das Papier (Testliner) mit der 2. Elektrode aufgesetzt wird. Nun wird jene Zeit gemessen, die das Wasser des Klebstoffs zum Diffundieren durch das Papier braucht, bis ein Stromfluß von 0,3 mA erreicht wird.

Für die Untersuchung wurden vier verschiedene Stärkemuster, nämlich Mais-, Kartoffel- und Wachsmaisstärke sowie Amylopektin-Kartoffelstärke mit einem Carboxymethylierungsgrad von DS= 0,077 hergestellt.

In der folgenden Tabelle sind die Meßergebnisse aus dieser Testreihe zusammengestellt

**Tabelle 5**

| Stärke | Konz. | BF-Viskosität in [mPas] | Wasserrückhaltevermögen | | | Mittel-wert | Klebkraft |
|---|---|---|---|---|---|---|---|
| | [%] | 20Upm | [s] | [s] | [s] | [s] | Reißtest |
| MS | 12 | 3790 | 47 | 45 | 46 | 45 | 13 min |
| KS | 15 | 4140 | 71 | 73 | 74 | 69 | 8 min |
| WMS | 18 | 3920 | 74 | 70 | 73 | 72 | 8 min |
| AP-KS | 20 | 3120 | 86 | 90 | 89 | 87 | 4 min |

Deutlich erkennt man, daß jene Muster, die eine gute Klebkraft zeigen, eine dementsprechend längere Penetrationszeit ins Papier haben. Der Kleber auf Basis der carboxymethylierten Amylopektin-Kartoffelstärke weist gegenüber allen anderen Stärkederivaten das längste Wasserrückhaltevermögen auf, was augenfällig mit der exzellenten Klebkraft in direktem Zusammenhang steht. Demgegenüber hat die carboxymethylierte Maisstärke die schlechteste Wasserretention, was sich auch in ihrer deutlich schlechteren Klebkraft wiederspiegelt.

Im folgenden sind einige Herstellungsvorschriften zur Gewinnung von abgebauter, modifizierter bzw. derivatisierter Amylopektin-Kartoffelstärke sowie einige Beispiele angegeben, die die gute Verwendbarkeit der Amylopektin-Kartoffelstärke auf dem Klebstoffsektor demonstriert.

### Vorschrift 1:

### Saure Hydrolyse der Amylopektin-Kartoffelstärke

In einem Dreihalsrundkolben wurde ein 40%iger Slurry aus 1000g Amylopektin-Kartoffelstärke angerührt und mit 50 g konz. Salzsäure/kg TS versetzt. Bei einer tatsächlichen Acidität von 1,8 ml 0,1N NaOH/g im Slurry wurde die Stärke entsprechend den Vorgaben einige Stunden bei 50°C hydrolysiert. Zur Aufarbeitung wurde der Slurry neutralisiert, gewaschen und filtriert.

Die Messung der Viskositäten von 20%igen Kleistern erfolgten mittels Brookfield-Viskosimeter DV II+, bei 30°C und 50upm. Die Viskosität ist in mPas angegeben.

In der folgenden Tabelle sind einige Meßdaten im Vergleich zu herkömmlichen Stärken zusammengefaßt.

**Tabelle 6:**

| Stärke | Temp./ Rkt.-Zeit | 3h | 3h 30min | 4h | 4h 30min | 5h | 5h 30min | 6h |
|---|---|---|---|---|---|---|---|---|
| AP-KS | 30°C | 710 | 650 | 540 | 480 | 430 | 350 | 290 |
| WMS | 30°C | 660 | 600 | 504 | 402 | 367 | 352 | 336 |
| KS* | 80°C | 1600 | 1080 | 556 | 360 | 196 | 88 | 72 |

| | | | | | | | | |
|---|---|---|---|---|---|---|---|---|
| * Der saure Abbau von nativer KS liefert ein Produkt, das 20%ig schon unterhalb von 80°C zur Retrogradation neigt. AP-KS Amylopektin-Kartoffelstärke KS Kartoffelstärke WMS Wachsmaisstärke | | | | | | | | |

### Vorschrift 2:

### Enzymatisch abgebaute Amylopektin-Kartoffelstärke

1000g Amylopektin-Kartoffelstärke wurde als 30%iger Slurry angerührt und mit einer 10%igen Salzsäure auf pH 6 gestellt. Anschließend wurden 0,07% Optitherm α-Amylase (Solvay) auf Trockenstärke zugesetzt und der Ansatz unter ständigem Rühren auf annähernd 100°C erhitzt. Bei 60°C verkleisterte die Stärke, wobei die Drehzahl des Rührers zur Verbesserung der Durchmischung erhöht wurde. Mit der Verflüssigung des Ansatzes bzw. mit Verkleisterungsende wurde der Kleister entsprechend den zeitlichen Vorgaben abgebaut.

Zur Beendigung des enzymatischen Abbaus wurde das Enzym ca. 30 min bei 120°C thermisch inhibiert. Zur Aufarbeitung wurde der Kleister abgekühlt und neutral gestellt.

Die Trocknung des Kleisters erfolgte durch Sprühtrocknung (Fa. Anhydro) bei ca. 180°C.

Die Messung der Viskositäten der 30%igen Kleister erfolgte mittels Brookfield-Viskosimeter DV II+, bei 25°C und 100 upm. Die Viskosität ist in mPas angegeben.

In der folgenden Tabelle 6 sind einige analytische Daten zum enzymatischen Abbau aufgelistet:

**Tabelle 7:**

| Produkt | Rkt.-Zeit [min] | DE-Wert | Konzentration [%TS] | BF-Viskosität [mPas] |
|---|---|---|---|---|
| 1 | 30 | 8 | 30 | 70 |
| 2 | 25 | 7 | 30 | 80 |
| 3 | 20 | 5 | 30 | 100 |
| 4 | 10 | 4 | 30 | 130 |
| 5 | 5 | 3,5 | 30 | 260 |
| KS/1 | 20 | 8 | 30 | 700 |
| KS/2 | 15 | 6 | 30 | geliert |

| | | | | |
|---|---|---|---|---|
| KS Kartoffelstärke | | | | |

Die Ergebnisse zeigen deutlich, daß die Amylopektin-Kartoffelstärke für eine gegebene Stabilität gegenüber der gewöhnlichen Kartoffelstärke bei wesentlich tieferen DE-Werten hergestellt werden kann.

### Vorschrift 3:

### Vernetzte bzw. carboxymethylierte Amylopektin-Kartoffelstärke

Im folgenden wird die Herstellung einer epi-vernetzten und/oder carboxymethylierten Amylopektin-Kartoffelstärke beschrieben.

### a) Vernetzung der Stärke mit Epichlorhydrin

Die Vernetzungsreaktionen erfolgten in einem Dreihalsrundkolben. Hierfür Wurde ein 40%iger Slurry hergestellt, dann entsprechend den Vorgaben eine 3%ige Natronlauge (1% NaOH / Trockenstärke) und die entsprechende Menge Epichlorhydrin hinzugegeben. Die Vernetzungsreaktion dauerte etwa 24h bei einer Temperatur von 40-50°C. Je stärker vernetzt wird, um so höher kann die Temperatur gewählt werden.

Der erhaltene Slurry wurde danach entweder walzengetrocknet oder je nach Anforderung noch carboxymethyliert.

Die Herstellung vernetzter Amylopektin-Kartoffelstärken auf Basis der Adipinsäure bzw. auf Basis von Phosphatgruppen erfolgte in ähnlicher Weise, entsprechend den Ausführungen, die in "Modified Starches: Properties and Uses" von O.B. Wurzburg beschrieben sind.

### b) Vernetzung mit Aldehyden:

Die acetalische Vernetzung erfolgte durch Verwendung von Aldehyden, im Speziellen durch Umsetzung mit Formaldehyd, Acetaldehyd, Propionaldehyd oder Acrolein oder Glyoxal.

Zu diesem Zweck wurde ein 40%iger Slurry auf 35°C erwärmt und mit Salzsäure auf pH 3 gestellt. Entsprechend dem vorgegebenen DS-Wert wird der Aldehyd als 35%ige Lösung zugesetzt. Die Vernetzung erfolgt bei pH 3 und 35°C und dauert je nach Grad der Umsetzung zwischen 1 und 24 Stunden. Zur Aufarbeitung wird das Reaktionsgemisch auf pH 6-7 neutralisiert, gewaschen und getrocknet.

### b) Carboxymethylierung

Die Carboxymethylierung erfolgte im allgemeinen in einem thermostatisierten Lödige-Pflugscharmischer. Zu diesem Zweck wurde ein 40%iger Slurry vorgelegt und entsprechend dem DS-Wert das Natriummonochloracetat in Pulverform zugegeben. Anschließend erfolgte die Zugabe von 50%iger Natronlauge (im Mengenäquivalent zum Reagenz mit ca. 5% Überschuß). Der pH-Wert betrug etwa 11-12. Das Reaktionsgemisch wurde anschließend zwei Stunden bei T = 70-80 °C umgesetzt. Der erhaltene Kleister wurde abschließend walzengetrocknet

Die Walzentrocknung erfolgte immer bei 5 bar Wasserdampf und unter Verwendung von drei Sümpfen. Alle walzengetrockneten Produkte wurden anschließend über eine Alpine-Mühle vermahlen.

Die Herstellung von cyanoethylierter oder carbamoylierter Amylopektin-Kartoffelstärke erfolgte in ähnlicher Weise, entsprechend den Ausführungen, die in "Modified Starches: Properties and Uses" von O.B. Wurzburg, beschrieben sind.

### Vorschrift 4:

### Herstellung einer hydroxybutylierten Amvlopektin-Kartoffelstärke

Die Hydroxybutylierung der Amylopektin-Kartoffelstärke erfolgte durch Umsetzung eines 40%igen Slurrys in Gegenwart hoher Alkalimengen mit Butylenoxid. Bei einer Reaktionstemperatur von max. 55°C und einer Reaktionszeit bis zu 24 Stunden könnte das Produkt je nach gewünschten Derivatisierungsgrad (DS) hergestellt werden. Die Aufarbeitung erfolgte wieder durch Neutralisation und anschließendes Waschen der Stärke. Je nach Anforderung wurde das Produkt entweder granulär getrocknet oder durch verschiedene bekannte Verfahren, wie beispielsweise Walzentrocknung, kaltwasserlöslich gemacht.

### Vorschrift 5:

### Hydroxypropylierte und mechanisch abgebaute Amylopektin-Kartoffelstärke.

In einem Minireaktor wurden 2500g Amylopektin-Kartoffelstärke als 40%iger Slurry angerührt und in Gegenwart von Natriumsulfat bei pH 11,6 bei 35°C mit 540ml Propylenoxid (DS = 0,5) umgesetzt. Zur Aufarbeitung wurde das Stärkederivat neutralisiert, intensiv gewaschen und bei 40°C getrocknet.

Mittels eines Kneters wurden 1500g hydroxypropylierte Amylopektin-Kartoffelstärke in 600ml Wasser aufgenommen und bei 80°C 2,5 Stunden geschert. Anschließend wurde bei weiterem Scheren der Kleister auf 30% verdünnt, bis die erhaltene Mischung eine Brookfield-Viskosität von 4000mPas hatte.

Die folgenden Beispiele zeigen spezielle Rezepturen für den Einsatz in den jeweiligen Anwendungsgebieten.

### Beispiel 1

### Zigarettenkleber

| | |
|---|---|
| Rezeptur 1 | bis 60 % dextrinierte Amylopektin-Kartoffelstärke |
| | bis 60 % hydrolysierte Amylopektin-Kartoffelstärke |
| | 30-40 % Wasser |
| | bis 0,5 % Konservierungsmittel |
| Rezeptur 2 | bis 60 % hydroxyalkylierte Amylopektin-Kartoffelstärke |
| | bis 60 % vernetzte Amylopektin-Kartoffelstärke |
| | 30-40 % Wasser |
| | bis 3% Natriumperborat |
| | bis 0,5 % Konservierungsmittel |

Ein typischer Kleber nach Rezeptur 1 enthält
300 g dextrinierte Amylopektin-Kartoffelstärke
400 g hydrolysierte Amylopektin-Kartoffelstärke
300 g Wasser
0,3 g Benzisothiazolidin

Der hergestellte Klebstoff hatte bei 23°C eine Brookfield-Viskosität von 3420 mPas und zeigte in Tests mittels Texture Analyser optimale Klebkraft.

Ein typischer Kleber nach Rezeptur 2 enthält:
245 g hydroxypropylierte Amylopektin-Kartoffelstärke
120 g mit Acetanhydrid/Adipinsäure vernetzte Amylopektin-Kartoffelstärke
620 g Wasser
15g Natriumperborat
0,5 g Benzisothiazolidin

Der hergestellte Klebstoff hatte bei 23°C eine Brookfield-Viskosität von 1180 mPas und zeigte in Tests mittels Texture Analyser optimale Klebkraft.

### Beispiel 2

### Tapetenkleber

Ein Tapetenkleber mit einer Rezeptur in folgendem Rahmen wurde durch Walzentrocknung zu einem fertigen Produkt verarbeitet.
30 - 80 % Wasser
30-70 % derivatisierte Amylopektin-Kartoffelstärke, wobei leicht vernetzte und/oder carboxymethylierte oder oxypropylsulfonierte Produkte bevorzugt sind. Die Amylopektin-Kartoffelstärke kann aber auch als vernetzte hydroxypropylierte und carboxymethyliertes Produkt vorliegen.
2 - 40 % Celluloseether, insbesondere CMC, HEC, MC, HPC
2 - 40 % dispergierbare oder wasserlösliche Polymere, insbesondere Polyvinylalkohole oder Methacrylate.

Je nach Anwendungsfall werden noch diverse Additive, wie Füllstoffe, Konservierungsmittel oder dergl., zugesetzt.

### Beispiel 3

### Wellpappenkleber

Primäre Stärke: Die kaltwasserlösliche Amylopektin-Kartoffelstärke wurde einerseits direkt als 35%iger Slurry (S), andererseits nach Vorverkleisterung (K) eines 35%igen Slurrys in einem Pflugscharmischer, auf der Walze getrocknet.

Zum Vergleich wurde eine handelsübliche, im Slurry walzengetrocknete Maisstärke eingesetzt.
Sekundäre Stärke: Als sekundäre Stärke wurde native Maisstärke verwendet.

### Additive:

Dem Wellpappenklebstoff wurde eine vorgefertigte Mischung (Prämix), bestehend aus folgenden Komponenten,
Soda, Borax, Kalk und Cellulose
zugesetzt.

Diese Zusätze können dem Kleber auch einzeln und nicht nur als Prämix zugegeben werden.

### Herstellung des Wellpappenklebers:

Es wurden 450 g Wasser mit 35°C vorgelegt und die vorgefertigte Mischung aus 70% sekundärer Stärke und 12 % Prämix eingerührt. Anschließend wurde die primäre Stärke zugesetzt und das Gemisch 30 min bei 3000 U/min geschert. Die Stein-Hall-Viskosität der hergestellten Mischungen betrug zwischen 80 und 100s. Um diese Wertvorgabe zu erreichen, wurde die Menge an eingesetzter primärer und sekundärer Stärke variiert.

Die Klebkraft wurde mittels eines Texture-Analysers durchgeführt, wobei die maximale Kraftauslenkung, angegeben in g, beim Auseinanderreissen des nur durch die primäre Stärke gefestigtes Papiers erfolgte.

Die Meßparameter entsprachen den oben bei der Erwähnung des Klebkraft-Tests angeführten Angaben.

Die Beurteilung erfolgte so, daß pro Klebstoff zehn Messungen am Texture-Analyser durchgeführt wurden und aus den Meßwerten der Mittelwert gebildet wurde. Die Rohfestigkeit ("Green-Bond") ist dann optimal, wenn die Kraftauslenkung > 5000g betrug

**Tabelle 8:**

| primäre Stärke | Einsatzmenge | Stein-Hall-Viskosität | Brookfield-Viskosität | Brabender | Klebkraft Green-Bond | Wet Pin Adhesion | Bewertung Rheologie |
|---|---|---|---|---|---|---|---|
| | [%] | [s] | 20upm [mPas] | Verkleist.-Temp. [°C] | [g] | [lbs/8 in²] | |
| MS/S | 100 | 94 | 2750 | 51 | 3676 | 11,6 | + |
| KS/S | 80 | 93 | 1280 | 48 | 4624 | 8,4 | ++ |
| KS/K | 85 | 87 | 920 | 45,3 | 4361 | 7,7 | ++ |
| AP-KS/S | 77 | 92 | 790 | 47,7 | 6282 | 18,3 | +++ |
| AP-KS/K | 77 | 89 | 695 | 46,8 | 5950 | 19,4 | ++++ |

| | | | | | | | |
|---|---|---|---|---|---|---|---|
| MS Maisstärke KS Kartoffelstärke AP-KS Amylopektin-Kartoffelstärke K walzengetrocknet aus dem Kleister S walzengetrocknet aus dem Slurry | | | | | | | |

Wie aus der Tabelle 8 ersichtlich, zeigen beide Mischungen mit der walzengetrockneten Amylopektin-Kartoffelstärke als primäre Stärke deutlich höhere Rohfestigkeit. Aber auch die Naßfestigkeit der Amylopektin-Kartoffelstärke ist besonders vorteilhaft. Zusätzlich ist die Rheologie des Wellpappenklebers hinsichtlich Kurzzügigkeit und geringem Spritzverhälten (je besser das rheologische Verhalten, desto höher die Anzahl an +) deutlich besser. Weiters kann die Einsatzmenge an kaltwasserlöslicher Amylopektin-Kartoffelstärke gegenüber herkömmlichen Stärken merklich reduziert werden.

### Beispiel 4

### Buchbinderklebstoff

Für diesen Zweck kann folgende Rezeptur angegeben werden:
20 - 80% dextrinierte Emulsions-Polymer-Latex
10 - 50% des zusätzlich zugegebenen Dextrins
min. 0,1% Borax
bis zu 10% Weichmacher
bis zu 30% Füllstoffe
bis zu 30% Wasser

Eine noch typischere Rezeptur ist:
75 g Polymer-Latex
70 g dextrinierte Amylopektin-Kartoffelstärke
0,5 g Borax
20 g Kreide
60 g Wasser

Der hierbei hergestellte Klebstoff zeigte in Tests mittels Texture Analyser optimale Verklebung. Die Klebkraft, ermittelt nach dem Reißtest, lag bei etwa 3 bis 5 min, während vergleichsweise die auf gewöhnlicher Kartoffel- oder Wachsmaisstärke basierenden Klebstoffe eine Reißzeit von etwa 7 bis 10 min aufwiesen.

## Patentansprüche

1. Verwendung einer Klebstoff hergestellt von einer Pulvriges Klebstoffvorprodukt bei Zigarettenverklebung, wasseraktivierbaren Verklebung, Rundumverklebung, Überlappungsverklebung, Tapetenverklebung, Plakatverklebung, Buchbinderverklebung, Wellpappenverklebung, Sackverklebung, Papier- oder Kartonkaschierung oder Spiralhülsenwicklung, wobei der Pulvriges Klebstoffvorprodukt ist auf der Basis von Amylopektin-Stärke, gegebenenfalls in Kombination mit einem oder mehreren üblichen Zusatzmitteln, wie Rheologieverbesserern, Antischaummitteln, Stabilisatoren, Konservierungsmitteln und/oder weiteren, gegebenenfalls auf Nicht-Stärke-Basis beruhenden Klebstoffen bzw. Klebstoffvorprodukten, wobei die Amylopektin-Stärke eine Amylopektin-Kartoffelstärke mit mindestens 95 % Amylopektin, durch physikalische, chemische oder enzymatische Verfahren abgebaut, und als Quellstärke enthalten ist.

2. Verwendung nach Anspruch 1, **dadurch gekennzeichnet, dass** die Amylopektin-Kartoffelstärke aus einer Kartoffel gewonnen wurde, die zum Zweck der Amyloseinhibierung durch Züchtung oder molekularbiologische bzw. gentechnische Methoden verändert wurde.

3. Verwendung nach Anspruch 1 oder 2, **dadurch gekennzeichnet, dass** die Amylopektin-Kartoffelstärke aus einer Kartoffel gewonnen wurde, die durch antisense-Inhibition eines GBSS-Gens hinsichtlich der Amylosebildung inhibiert wurde.

4. Verwendung nach Anspruch 1 oder 2, **dadurch gekennzeichnet, dass** die Amylopektin-Kartoffelstärke aus einer Kartoffel gewonnen wurde, die durch Cosuppression hinsichtlich der Amylosebildung inhibiert wurde.

5. Verwendung nach einem der Ansprüche 1 bis 4, **dadurch gekennzeichnet, dass** er bzw. es frei von grenzflächenaktiven Emulgatoren ist.

6. Verwendung nach einem der Ansprüche 1 bis 5, **dadurch gekennzeichnet, dass** die Amylopektin-Kartoffelstärke kaltwasserlöslich, d.h. bei 25 °C zumindest zu 90 %, bevorzugt zu 95 %, insbesondere zu mehr als 99 %, in Wasser löslich ist.

7. Verwendung nach einem der Ansprüche 1 bis 6, **dadurch gekennzeichnet, dass** die Amylopektin-Kartoffelstärke physikalisch, durch thermische und/oder mechanische Verfahren abgebaut ist.

8. Verwendung nach einem der Ansprüche 1 bis 6, **dadurch gekennzeichnet, dass** die Amylopektin-Kartoffelstärke chemisch, durch thermochemische, oxidative oder saure Verfahren abgebaut ist.

9. Verwendung nach einem der Ansprüche 1 bis 8, **dadurch gekennzeichnet, dass** die Amylopektin-Kartoffelstärke in veretherter Form enthalten ist.

10. Verwendung nach Anspruch 9, **dadurch gekennzeichnet, dass** die Amylopektin-Kartoffelstärke als Methyl-, Ethyl-, Hydroxyethyl-, Hydroxypropyl-, Hydroxybutyl-, Carboxymethyl-, Cyanoethyl- oder Carbamoylether enthalten ist.

11. Verwendung nach einem der Ansprüche 1 bis 8, **dadurch gekennzeichnet, dass** die Amylopektin-Kartoffelstärke in veresterter Form enthalten ist.

12. Verwendung nach Anspruch 11, **dadurch gekennzeichnet, dass** darin eine veresterte Amylopektin-Kartoffelstärke enthalten ist, in deren Esterrest RCOOder Rest. R ein Alkyl-, Aryl-, Alkenyl-, Alkaryl- oder Aralkylrest mit 1 bis 17 Kohlenstoffatomen, bevorzugt mit 1 bis 6 Kohlenstoffatomen, insbesonders mit ein oder zwei Kohlenstoffatomen ist.

13. Verwendung nach Anspruch 12, **dadurch gekennzeichnet, dass** die Amylopektin-Kartoffelstärke als Essigsäure-, Propionsäure--, Buttersäure-, Stearinsäure-, Phthalsäure-, Bernsteinsäure-, Ölsäure-, Maleinsäure-, Fumarsäure- oder Benzoesäureester enthalten ist.

14. Verwendung nach einem der Ansprüche 1 bis 8, **dadurch gekennzeichnet, dass** die Amylopektin-Kartoffelstärke in vernetzter Form enthalten ist.

15. Verwendung nach Anspruch 14, **dadurch gekennzeichnet, dass** die Amylopektin-Kartoffelstärke mit Epichlorhydrin, gegebenenfalls im Gemisch mit (Poly)aminen, vernetzt ist.

16. Verwendung nach Anspruch 14, **dadurch gekennzeichnet, dass** die Amylopektin-Kartoffelstärke durch Umsetzung mit aldehydfreisetzenden Reagenzien, wie N,N'-Dimethylol-N,N'-ethylenharnstoff, mit Phosphoroxychlorid, Natriumtrimetaphosphat, Di- oder Polyepoxiden, gemischten Anhydriden von Carbonsäuren mit di- oder tribasischen Säuren, wie Adipinsäure/Ac₂O, mit Glyoxal oder Aldehyden, wie Form-, Acet- oder Propionaldehyd, vernetzt ist.

17. Verwendung nach einem der Ansprüche 1 bis 8, **dadurch gekennzeichnet, dass** die Amylopektin-Kartoffelstärke durch kationische oder anionische Gruppen modifiziert ist.

18. Verwendung nach einem der Ansprüche 1 bis 8, **dadurch gekennzeichnet, dass** die Amylopektin-Kartoffelstärke als Stärke-Propfpolymerisat oder Stärke-Pfropf-Copolymerisat vorliegt.

19. Verwendung nach Anspruch 18, **dadurch gekennzeichnet, dass** das Amylopektin-Kartoffelstärke-Pfropf-(Co)-Polymerisat als Emulsionspolymerisat vorliegt.

20. Verwendung nach einem der Ansprüche 1 bis 19, **dadurch gekennzeichnet, dass** die Amylopektin-Kartoffelstärke einen Derivatisierungsgrad von 0,00001 bis 3, vorzugsweise von 0,001 bis 2, insbesondere von 0,005 bis 1, hat.

21. Verwendung nach einem der Ansprüche 1 bis 20, **dadurch gekennzeichnet, dass** Amylopektin-Kartoffelstärke in Form einer Mischung von in den Ansprüchen 7 bis 20 genannten Derivaten enthalten ist.

22. Verwendung nach einem der Ansprüche 1 bis 20, **dadurch gekennzeichnet, dass** Amylopektin-Kartoffelstärke in Form einer derivatisierten Stärke, in welcher mindestens zwei der in den Ansprüchen 7 bis 21 genannten Derivatisierungsformen gleichzeitig vorliegen, enthalten ist und durch physikalische, chemische oder enzymatische Verfahren abgebaut ist.

23. Verwendung nach einem der Ansprüche 1 bis 22, wobei die Stärke eine abgebaute carboxymethylierte pulvrige Amylopektin-Kartoffelquellstärke ist, die epivernetzt, adipatvernetzt, acetalisch vernetzt und/oder phosphatvernetzt ist und durch physikalische, chemische oder enzymatische Verfahren abgebaut ist.

24. Verwendung nach einem der Ansprüche 1 bis 22, wobei die Stärke eine abgebaute cyanoethylierte pulvrige Amylopektin-Kartoffelquellstärke ist, die epivernetzt, adipatvernetzt, acetalisch vernetzt und/oder phosphatvernetzt ist und durch physikalische, chemische oder enzymatische Verfahren abgebaut ist.

25. Verwendung nach einem der Ansprüche 1 bis 22, wobei die Stärke eine abgebaute carbamoylierte pulvrige Amylopektin-Kartoffelquellstärke ist, die epivernetzt, adipatvernetzt, acetalisch vernetzt und/oder phosphatvernetzt ist und durch physikalische, chemische oder enzymatische Verfahren abgebaut ist.

26. Verwendung nach einem der Ansprüche 1 bis 22, wobei die Stärke eine abgebaute hydroxybutylierte pulvrige Amylopektin-Kartoffelquellstärke ist, die epivernetzt, adipatvernetzt, acetalisch vernetzt und/oder phosphatvernetzt ist und durch physikalische, chemische oder enzymatische Verfahren abgebaut ist.

27. Verwendung nach einem der Ansprüche 1 bis 22, wobei die Stärke eine agebaute pulvrige Amylopektin-Kartoffelquellstärke ist, die mit Epichlorhydrin, Adipinsäure und/oder Aldehyden vernetzt ist und durch physikalische, chemische oder enzymatische Verfahren abgebaut ist.

28. Verwendung nach einem der Ansprüche 23 bis 27, wobei die Stärke einen Derivatisierungsgrad von 0,00001 bis 3, vorzugsweise von 0,001 bis 2, insbesondere von 0,005 bis 1, hat.

## Claims

1. Use of an adhesive, made of a powdery adhesive pre-product for cigarette adhesive, water-activatable adhesive, all-around adhesion, overlapping adhesion, wallpaper adhesive, poster adhesive, bookbinding adhesive, corrugated-board adhesive, bag adhesive, adhesive for paper and paperboard lamination, or spiral-sleeve winding,
wherein the powdery adhesive pre-product is based on amylopectine starch, optionally in combination with one or several usual additives, such as rheology-improving agents, antifoam agents, stabilisers, preservatives, and/or further, optionally not starch-based, adhesives and/or adhesive pre-products, **characterised in that** the amylopectine starch is an amylopectine potato starch with at least 95% of amylopectine degraded by physical, chemical or enzymatic processes and obtained as a pregelatinised starch.

2. Use according to claim 1, **characterized in that** the amylopectine potato starch has been recovered from a potato modified by culturing or by molecular-biological and/or genetically-engineering methods so as to inhibit amylose.

3. Use according to claim 1 or 2, **characterized in that** the amylopectine potato starch has been recovered from a potato inhibited by antisense inhibition of a GBSS gene so as to inhibit amylose formation.

4. Use according to claim 1 or 2, **characterized in that** the amylopectine potato starch has been recovered from a potato inhibited by co-suppression so as to inhibit amylose formation.

5. Use according to any one of claims 1 to 4, **characterised in that** it is free of surface-active emulsifiers.

6. Use according to any one of claims 1 to 5, **characterised in that** the amylopectine potato starch is water-soluble in cold water, i.e. at 25°C to at least 90%, preferably to 95%, in particular to more than 99%.

7. Use according to any one of claims 1 to 6, **characterised in that** the amylopectine potato starch has been degraded physically by thermal and/or mechanical processes.

8. Use according to any one of claims 1 to 6, **characterised in that** the amylopectine potato starch has been degraded chemically by thermo-chemical, oxidative or acidic processes.

9. Use according to any one of claims 1 to 8, **characterised in that** the amylopectine potato starch is included in etherified form.

10. Use according to claim 9, **characterised in that** the amylopectine potato starch is contained as methyl, ethyl, hydroxyethyl, hydroxypropyl, hydroxybutyl, carboxymethyl, cyanoethyl or carbamyol ether.

11. Use according to any one of claims 1 to 8, **characterised in that** the amylopectine potato starch is contained in esterified form.

12. Use according to claim 11, **characterised in that** it includes an esterified amylopectine potato starch in whose ester residue RCOO- the residue R is an alkyl, aryl, alkenyl, alkaryl or aralkyl residue with 1 to 17 carbon atoms, preferably with 1 to 6 carbon atoms, in particular with one or two carbon atom(s).

13. Use according to claim 12, **characterised in that** the amylopectine potato starch is contained as acetic-acid, propionic-acid, butyric-acid, stearic-acid, phtalic-acid, succinic-acid, oleic-acid, maleic-acid, fumaric-acid or benzonic-acid ester.

14. Use according to any one of claims 1 to 8, **characterised in that** the amylopectine potato starch is contained in cross-linked form.

15. Use according to claim 14, **characterised in that** the amylopectine potato starch is cross-linked with epichlorohydrin, optionally in the mixture with (poly)amines.

16. Use according to claim 14, **characterised in that** the amylopectine potato starch is cross-linked by reaction with aldehyde-releasing reagents, e.g. N,N'-dimethylol-N,N'-ethylene urea, with phosphoroxy chloride, sodium trimetaphosphate, diepoxides or polyepoxides, mixed anhydrides of carbonic acids with dibasic or tribasic acids, such as adipic acid/Ac₂0, with glyoxal or aldehydes, such as formaldehyde, acetaldehyde or propionaldehyde.

17. Use according to any one of claims 1 to 8, **characterised in that** the amylopectine potato starch has been modified by cationic or anionic groups.

18. Use according to any one of claims 1 to 8, **characterised in that** the amylopectine potato starch is present as starch graft polymerisate or starch graft co-polymerisate.

19. Use according to claim 18, **characterised in that** the amylopectine-potato-starch graft (co)polymerisate is present as emulsion polymerisate.

20. Use according to any one of claims 1 to 19, **characterised in that** the amylopectine potato starch has a degree of derivatization of from 0.00001 to 3, preferably of from 0.001 to 2, in particular of from 0.005 to 1.

21. Use according to any one of claims 1 to 20, **characterised in that** the amylopectine potato starch is contained in the amylopectine potato starch is contained in the form of a mixture of derivatives mentioned in claims 7 to 20.

22. Use according to any one of claims 1 to 20, **characterised in that** the amylopectine potato starch is contained in the form of a derivatized starch, in which at least two of the derivatization forms of claims 7 to 21 are present at the same time, includes at least 95% of amylopectine, and has been degraded by physical, chemical or enzymatic processes.

23. Use according to any one of claims 1 to 22, wherein the starch is a degraded carborymethylated, powdery amylopectine potato starch which is epi cross-linked, adipate cross-linked, acetal cross-linked and/or phosphate cross-linked and has been degraded by physical, chemical or enzymatic processes.

24. Use according to any one of claims 1 to 22, wherein the starch is a degraded cyanoethylated, powdery amylopectine potato starch which is epi cross-linked, adipate cross-linked, acetal cross-linked and/or phosphate cross-linked contains and has been degraded by physical, chemical or enzymatic processes.

25. Use according to any one of claims 1 to 22, wherein the starch is a degraded carbomoylated, powdery amylopectine potato starch which is epi cross-linked, adipate cross-linked, acetal cross-linked and/or phosphate cross-linked and has been degraded by physical, chemical or enzymatic processes.

26. Use according to any one of claims 1 to 22, wherein the starch is a degraded hydroxybutylated, powdery amylopectine potato starch which is epi cross-linked, adipate cross-linked, acetal cross-linked and/or phosphate cross-linked and has been degraded by physical, chemical or enzymatic processes.

27. Use according to any one of claims 1 to 22, wherein the starch is a degraded powdery amylopectine potato starch which is cross-linked with epichlorohydrin, adipic acid and/or aldehydes and has been degraded by physical, chemical or enzymatic processes.

28. Use according to any one of claims 23 to 27, wherein the starch has a degree of derivatization of from 0.00001 to 3, preferably of from 0.001 to 2, in particular of from 0.005 to 1.

## Revendications

1. Utilisation d'un adhésif préparé à partir d'un précurseur pulvérulent d'adhésif pour le collage de cigarettes, le collage activable par l'eau, le collage périphérique, le collage par chevauchement, le collage de papiers peints, le collage d'affiches, le collage de reliures, le collage de carton ondulé, le collage de sacs, le contre-collage de papier ou de carton ou la mise au point d'un tube moulé hélicoïdal, le précurseur pulvérulent d'adhésif étant à base d'amidon amylopectinique, le cas échéant en combinaison avec un ou plusieurs additifs usuels, tels que des correcteurs de rhéologie, des antimoussants, des stabilisateurs, des agents de conservation et/ou d'autres adhésifs ou précurseurs d'adhésifs qui le cas échéant ne sont pas à base d'amidon, l'amidon amylopectinique étant une fécule de pomme de terre amylopectinique contenant au moins 95 % d'amylopectine, étant dégradé par des procédés physiques, chimiques ou enzymatiques et étant contenu comme amidon gonflant.

2. Utilisation selon la revendication 1, **caractérisée en ce que** la fécule de pomme de terre amylopectinique a été obtenue à partir d'une pomme de terre qui a été modifiée par culture ou par des méthodes de biologie moléculaire ou de génie génétique en vue de l'inhibition de l'amylose.

3. Utilisation selon la revendication 1 ou 2, **caractérisée en ce que** la fécule de pomme de terre amylopectinique a été obtenue à partir d'une pomme de terre dont la formation d'amylose a été inhibée par inhibition anti-sens d'un gène GBSS.

4. Utilisation selon la revendication 1 ou 2, **caractérisée en ce que** la fécule de pomme de terre amylopectinique a été obtenue à partir d'une pomme de terre dont la formation d'amylose a été inhibée par co-suppression.

5. Utilisation selon l'une des revendications 1 à 4, **caractérisée en ce qu'**elle est exempte d'émulsifiant tensioactif.

6. Utilisation selon l'une des revendications 1 à 5, **caractérisée en ce que** la fécule de pomme de terre amylopectinique est hydrosoluble, c'est-à-dire à 25°C à au moins 90 %, de préférence à 95 %, notamment à plus de 99 %.

7. Utilisation selon l'une des revendications 1 à 6, **caractérisée en ce que** la fécule de pomme de terre amylopectinique est dégradée physiquement, par des procédés thermiques et/ou mécaniques.

8. Utilisation selon l'une des revendications 1 à 6, **caractérisée en ce que** la fécule de pomme de terre amylopectinique est dégradée chimiquement, par des procédés thermochimiques, oxydants ou acides.

9. Utilisation selon l'une des revendications 1 à 8, **caractérisée en ce que** la fécule de pomme de terre amylopectinique est contenue sous une forme éthérifiée.

10. Utilisation selon la revendication 9, **caractérisée en ce que** la fécule de pomme de terre amylopectinique est contenue sous la forme de méthyléther, éthyléther, hydroxyéthyléther, hydroxypropyléther, hydroxybutyléther, carboxyméthyléther, cyanoéthyléther ou carbamoyléther.

11. Utilisation selon l'une des revendications 1 à 8, **caractérisée en ce que** la fécule de pomme de terre amylopectinique est contenue sous une forme estérifiée.

12. Utilisation selon la revendication 11, **caractérisée en ce qu'**elle contient une fécule de pomme de terre amylopectinique estérifiée dans le résidu ester RCOO- de laquelle le reste R est un reste alkyle, aryle, alcényle, alkaryle ou aralkyle ayant de 1 à 17 atomes de carbone, de préférence de 1 à 6 atomes de carbone, notamment un ou deux atomes de carbone.

13. Utilisation selon la revendication 12, **caractérisée en ce que** la fécule de pomme de terre amylopectinique est contenue sous forme d'ester de l'acide acétique, de l'acide propionique, de l'acide butyrique, de l'acide stéarique, de l'acide phtalique, de l'acide succinique, de l'acide oléique, de l'acide maléique, de l'acide fumarique ou de l'acide benzoïque.

14. Utilisation selon l'une des revendications 1 à 8, **caractérisée en ce que** la fécule de pomme de terre amylopectinique est contenue sous une forme réticulée.

15. Utilisation selon la revendication 14, **caractérisée en ce que** la fécule de pomme de terre amylopectinique est réticulée avec de l'épichlorhydrine, le cas échéant en mélange avec des (poly)amines.

16. Utilisation selon la revendication 14, **caractérisée en ce que** la fécule de pomme de terre amylopectinique est réticulée par mise à réagir avec des réactifs libérant un aldéhyde, tels que la N,N'-diméthylol-N-N'-éthylène-urée ; avec l'oxychlorure de phosphore, avec le trimétaphosphate de sodium, avec des di- ou des polyépoxydes, avec des anhydrides mélangés d'acides carboxyliques et d'acides di- ou tribasiques, tels que l'acide adipique/Ac₂O, avec le glyoxal ou des aldéhydes, tels que le formaldéhyde, l'acétaldéhyde ou le propionaldéhyde.

17. Utilisation selon l'une des revendications 1 à 8, **caractérisée en ce que** la fécule de pomme de terre amylopectinique est modifiée par des groupes cationiques ou anioniques.

18. Utilisation selon l'une des revendications 1 à 8, **caractérisée en ce que** la fécule de pomme de terre amylopectinique est présente sous forme de polymère greffé d'amidon ou de copolymère greffé d'amidon.

19. Utilisation selon la revendication 18, **caractérisée en ce que** le (co)polymère greffé de fécule de pomme de terre amylopectinique est présent sous la forme d'un polymère par émulsion.

20. Utilisation selon l'une des revendications 1 à 19, **caractérisée en ce que** la fécule de pomme de terre amylopectinique a un degré de dérivation de 0,00001 à 3, de préférence de 0,001 à 2, notamment de 0,005 à 1.

21. Utilisation selon l'une des revendications 1 à 20, **caractérisée en ce que** la fécule de pomme de terre amylopectinique est contenue sous la forme d'un mélange de dérivés selon les revendications 7 à 20.

22. Utilisation selon l'une des revendications 1 à 20, **caractérisée en ce que** la fécule de pomme de terre amylopectinique est contenue sous la forme d'un amidon dérivé dans lequel au moins deux des formes de dérivation selon les revendications 7 à 21 sont présentes simultanément, et est dégradée par des procédés physiques, chimiques ou enzymatiques.

23. Utilisation selon l'une des revendications 1 à 22, dans laquelle l'amidon est une fécule gonflante de pomme de terre amylopectinique pulvérulente carboxyméthylée dégradée, laquelle est réticulée avec un composé épi, un adipate, un acétal et/ou un phosphate et est dégradée par des procédés physiques, chimiques ou enzymatiques.

24. Utilisation selon l'une des revendications 1 à 22, dans laquelle l'amidon est une fécule gonflante de pomme de terre amylopectinique pulvérulente cyanoéthylée dégradée, laquelle est réticulée avec un composé épi, un adipate, un acétal et/ou un phosphate et est dégradée par des procédés physiques, chimiques ou enzymatiques.

25. Utilisation selon l'une des revendications 1 à 22, dans laquelle l'amidon est une fécule gonflante de pomme de terre amylopectinique pulvérulente carbamoylée dégradée, laquelle est réticulée avec un composé épi, un adipate, un acétal et/ou un phosphate et est dégradée par des procédés physiques, chimiques ou enzymatiques.

26. Utilisation selon l'une des revendications 1 à 22, dans laquelle l'amidon est une fécule gonflante de pomme de terre amylopectinique pulvérulente hydroxybutylée dégradée, laquelle est réticulée avec un composé épi, un adipate, un acétal et/ou un phosphate et est dégradée par des procédés physiques, chimiques ou enzymatiques.

27. Utilisation selon l'une des revendications 1 à 22, dans laquelle l'amidon est une fécule gonflante de pomme de terre amylopectinique pulvérulente dégradée, laquelle est réticulée avec de l'épichlorhydrine, de l'acide adipique et/ou des aldéhydes et est dégradée par des procédés physiques, chimiques ou enzymatiques.

28. Utilisation selon l'une des revendications 23 à 27, dans laquelle l'amidon présente un degré de dérivation de 0,00001 à 3, de préférence de 0,001 à 2, notamment de 0,005 à 1.
